# EUROPEAN PATENT SPECIFICATION

(11) **EP 4 226 251 B1**
(45) Date of publication and mention of the grant of the patent: **02.07.2025**
(21) Application number: 21778649.0
(22) Date of filing: 02.09.2021
(51) Int. Cl.: G06F 13/36

(54) **READ OPTIONAL AND WRITE OPTIONAL COMMANDS**
WAHLWEISES LESEN UND SCHREIBEN VON OPTIONALEN BEFEHLEN
COMMANDES OPTIONNELLES DE LECTURE ET D'ÉCRITURE

(30) Priority: 12.10.2020 US 202017068293
(43) Date of publication of application: 16.08.2023
(73) Proprietor: QUALCOMM INCORPORATED, San Diego, California 92121-1714 (US)
(72) Inventor: TURNER, Andrew Edmund, San Diego, California 92121-1714 (US); PATSILARAS, George, San Diego, California 92121-1714 (US); MA, Zhenbiao, San Diego, California 92121-1714 (US); PALACHARLA, Subbarao, San Diego, California 92121-1714 (US); RYCHLIK, Bohuslav, San Diego, California 92121-1714 (US); ZGHAL, Tarek, San Diego, California 92121-1714 (US); KOOB, Christopher, San Diego, California 92121-1714 (US)
(74) Representative: Pritzlaff, Stefanie Lydia
(86) International application number: PCT/US2021/048804
(87) International publication number: WO 2022/081273

(56) References cited:
- US-A- 5 365 045

## Description

### BACKGROUND

All memory access transactions (e.g., read or write transactions) in a system on chip (SoC) have a main memory (e.g., random access memory (RAM)) as a terminating agent for the memory access transaction. Some memory access transactions can return results before reaching the main memory if data resides in a memory (e.g., cache) found on a path between an issuing device (e.g., processor) of the memory access transaction and the terminating agent. The memory access transactions can reach the termination agent when the memory access transaction fails at the devices on the path between the issuing device and the terminating agent. Memory access transactions that fail to complete prior to reaching the termination agent may be transmitted off of the SoC to reach the terminating agent. Memory access transactions that are transmitted off of the SoC incur greater resource costs (e.g., time and bandwidth) compared to memory access transactions that remain on the SoC.

US 5,365,045 A discloses an integrated circuit (IC) card that comprises, a memory including a system area for storing system information, and a user area for storing user information, a CPU for controlling information read/write access of the memory, and a memory for storing program data for determining an operation of the CPU. The CPU stores predetermined data in the user area on the basis of a first command obtained from an external device, and compares the predetermined data with another predetermined data stored in the user area on the basis of a second command obtained from the external device. The CPU detects an abnormality of one of the memory, and data and address lines of the memory according to the result of comparison.

### SUMMARY

The invention is defined by the independent claims. The dependent claims define advantageous embodiments.

Various disclosed aspects may include apparatuses and methods for managing optional commands. Various aspects may include receiving an optional command from an optional command request device, determining whether the optional command can be implemented, and transmitting, to the optional command request device, an optional command no data response in response to determining that the optional command cannot be implemented.

Some aspects may further include generating the optional command no data response in response to determining that the optional command cannot be implemented.

Some aspects may further include determining whether a component of a computing device receiving the optional command is an optional command terminal device, and generating the optional command no data response in response to determining that the device receiving the optional command is an optional command terminal device.

Some aspects may further include interpreting an optional command terminal device ID field of the optional command, in which determining whether a device receiving the optional command is an optional command terminal device is based on interpreting the optional command terminal device ID field.

Some aspects may further include determining whether an optional command no data response condition is met, and generating the optional command no data response in response to determining that the optional command no data response condition is met.

Some aspects may further include interpreting an optional command no data response condition field of the optional command, in which determining whether an optional command no data response condition is met is based on interpreting the optional command no data response condition field.

In some aspects, transmitting the optional command no data response may include transmitting the optional command no data response by an optional command terminal device. Some aspects may further include receiving the optional command no data response from the optional command terminal device, and reissuing the optional command in response to receiving the optional command no data response.

In some aspects, transmitting the optional command no data response may include transmitting the optional command no data response by an optional command terminal device. Some aspects may further include receiving the optional command no data response from the optional command terminal device, and abandoning the optional command in response to receiving the optional command no data response.

In some aspects, the optional command may include an optional command terminal device ID field configured to indicate at least one optional command terminal device allowed to respond to the optional command with an optional command no data response.

In some aspects, the optional command may include an optional command no data response condition field configured to indicate at least one condition for responding to the optional command with an optional command no data response.

In some aspects, the optional command no data response may include an optional command no data response terminal device ID field configured to indicate an optional command terminal device transmitting the optional command no data response.

In some aspects, the optional command no data response may include an optional command no data response condition field configured to indicate an optional command no data response condition met for transmitting the optional command no data response.

Some aspects may further include terminating the optional command in response to determining that the optional command cannot be implemented, in which terminating the optional command may include preventing the optional command from being forwarded to a device along an optional command transaction path.

In some aspects, terminating the optional command may include converting the optional command to a conventional command, and forwarding the conventional command to a device along the optional command transaction path.

In some aspects, determining whether the optional command can be implemented may include determining whether the optional command can be implemented based on at least one of missing requested data, requested data being out of bounds for a buffer, a cost of implementing the optional command exceeding a cost threshold, implementation of the optional command resulting in an exception, error, or fault, or being denied access to a requested location or target data.

Some aspects may include generating the optional command by the optional command request device, and transmitting the optional command along an optional command transaction path.

Further aspects include a computing device having an optional command terminal device and an optional command request device configured to perform operations of any of the methods summarized above. Further aspects include a computing device having means for performing functions of any of the methods summarized above. Further aspects include a non-transitory processor-readable medium having stored thereon processor-executable instructions configured to cause a processor and other components of a computing device to perform operations of any of the methods summarized above.

### BRIEF DESCRIPTION OF THE DRAWINGS

The accompanying drawings, which are incorporated herein and constitute part of this specification, illustrate example embodiments of various embodiments, and together with the general description given above and the detailed description given below, serve to explain the features of the claims.
FIG. 1 is a component block diagram illustrating an example computing device suitable for implementing various embodiments.
FIG. 2 is a component block diagram illustrating an example system on chip (SoC) suitable for implementing various embodiments.
FIG. 3 is a component block diagram illustrating example processing device suitable for implementing various embodiments.
FIG. 4 is a component block and signaling diagram illustrating an example of a read optional command and transaction suitable for implementing various embodiments.
FIG. 5 is a component block and signaling diagram illustrating an example of a write optional command and transaction suitable for implementing various embodiments.
FIG. 6 is a component block and signaling diagram illustrating an example of a read optional command used in avoiding livelock suitable for implementing various embodiments.
FIG. 7 is a component block and signaling diagram illustrating an example of a read optional command suitable for implementing various embodiments.
FIG. 8 is a component block and signaling diagram illustrating an example of a read optional command for data streamlining suitable for implementing various embodiments.
FIG. 9 is a process flow diagram illustrating a method for read optional and/or write optional commands according to an embodiment.
FIG. 10 is a process flow diagram illustrating a method for managing unsuccessful read optional and/or write optional commands according to an embodiment.
FIGS. 11A and 11B are process flow diagrams illustrating methods for managing read optional and/or write optional no data responses according to an embodiment.
FIG. 12 is a component block diagram illustrating an example mobile computing device suitable for implementing a read optional and/or write optional command enabled system in accordance with the various embodiments.
FIG. 13 is a component block diagram illustrating an example mobile computing device suitable for implementing a read optional and/or write optional command enabled system in accordance with the various embodiments.
FIG. 14 is a component block diagram illustrating an example server suitable for implementing a read optional and/or write optional command enabled system in accordance with the various embodiments.

### DETAILED DESCRIPTION

The various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the claims.

Various embodiments include methods and computing devices implementing such methods that provide for read optional and/or write optional commands. Some embodiments may include a read optional and/or write optional command implemented by modifying an existing read and/or write command in a bus protocol, a new command in the bus protocol, a new command in an instruction set architecture (ISA).

In some embodiments, the read optional and/or write optional command may be configured to indicate to a device along a read optional and/or write optional transaction path, between a read optional and/or write optional command request device and a main memory (e.g., random access memory (RAM)), to respond to an unsuccessful read optional and/or write optional command with a no data response signal. In some embodiments, the read optional and/or write optional command may be configured to indicate to the device along the read optional and/or write optional transaction path which devices may respond to the unsuccessful read optional and/or write optional command with a no data response signal. In some embodiments, the read optional and/or write optional command may be configured to indicate to the device along the read optional and/or write optional transaction path a condition for which devices may respond to the unsuccessful read optional and/or write optional command with a no data response signal.

In some embodiments, a no data response signal may indicate to the read optional and/or write optional command request device that the read optional and/or write optional command was unsuccessful. In some embodiments, a no data response signal may indicate to the read optional and/or write optional command request device at which device along the read optional and/or write optional transaction path the read optional and/or write optional command was unsuccessful. In some embodiments, a no data response signal may indicate to the read optional and/or write optional command request device a condition for why the read optional and/or write optional command was unsuccessful.

In some embodiments, the read optional and/or write optional command request device may be configured to retry the read optional and/or write optional command in response to receiving a no data response signal. In some embodiments, the read optional and/or write optional command request device may be configured to abandon the read optional and/or write optional command in response to receiving a no data response signal.

The term "optional command" is used herein to refer to a read optional command and/or write optional command as described herein. The term "optional command request device" is used herein to refer to a component of a computing device configured to issue an optional command. The term "optional command terminal device" is used herein to refer to a component of the computing device configured to issue an optional command no data response in response to not implementing a received optional command, such as a request device terminal device and/or a write optional terminal device. The term "optional command no data response" is used herein to refer to a read optional no data response and/or a write optional no data response issued by an optional command terminal device in response to not implementing an optional command. The term "optional command transaction path" is used herein to refer to a read optional command communication path and/or write optional command communication path of the optional command between an optional command request device and a main memory.

In some embodiments, the optional command may be configured to indicate to a component of the computing device that it is an optional command. The component of the computing device may be configured as an optional command terminal device and may issue an optional command no data response in response to not implementing the received optional command.

In some embodiments, the optional command may be configured to indicate to a component of the computing device which component of the computing device may be an optional command terminal device. In some embodiments, the optional command may include an optional command terminal device identifier (ID) field configured to indicate at least one optional command terminal device allowed to respond to the optional command with an optional command no data response. The term "optional command terminal device ID field" is used herein to refer to a read optional command terminal device ID field and/or a write optional command terminal device ID field. In some embodiments the optional command terminal device ID field may include an optional command terminal device ID configured to indicate a component of the computing device that may be an optional command terminal device. The term "optional command terminal device ID" is used herein to refer to a read optional command terminal device ID and/or a write optional terminal device ID.

In some embodiments, the optional command may be configured to indicate to a component of the computing device a reason for why an optional command terminal device may not implement the optional command and return an optional command no data response. In some embodiments, the optional command may include an optional command no data response condition field configured to indicate at least one condition for responding to the optional command with an optional command no data response. The term "optional command no data response condition field" is used herein to refer to a read optional command no data response condition field and/or a write optional command no data response condition field. In some embodiments the optional command no data response condition field may include an optional command no data response condition configured to indicate a reason or condition for responding to the optional command with an optional command no data response. The term "optional command no data response condition" is used herein to refer to a read optional command no data response condition and/or a write optional command no data response condition.

The optional command no data response may be an architected response specifically for use in response to optional commands. The term "optional command no data response" is used herein to refer to a read optional no data response and/or a write optional no data response. The optional command no data response may be issued by any or specific optional command terminal devices along an optional command transaction path. The optional command no data response may be different from and in addition to error or failure signaling, in which the optional command terminal device may forward the optional command and/or hold the optional command until the optional command can be implemented. The optional command no data response may be configured to indicate to the optional command device that the optional command is not implemented. The optional command no data response may be an acceptable state, such as an "OK" state, for the optional command request device, rather than an error or fault state triggered by an error or fault signal for failure of a memory access request. Not implementing the optional command may be an acceptable state in that the implementation of the optional command may not be required, for example, even when the implementing the optional command may be critical. As such, not implementing the optional command may not be an error or fault state triggered by an error or fault signal that may be configured to indicate no, incomplete, improper, etc. implementation of a required memory access. The optional command request device may be configured to retry and/or abandon the optional command in response. In some embodiments, the optional command request device may be preconfigured with how to respond to the optional command no data response. In some embodiments, the optional command request device may determine how to respond to the optional command no data response. The optional command no data response may include an optional command no data response field configured to indicate the type of the response to the optional command. The term "optional command no data response field" is used herein to refer to a read optional no data response field and/or a write optional no data response field.

In some embodiments, the optional command no data response may include an optional command no data response terminal device ID field configured to indicate which optional command terminal device responds to the optional command with the optional command no data response. The term "optional command no data response terminal device ID field" is used herein to refer to a read optional no data response terminal device ID field and/or a write optional no data response terminal device ID field. In some embodiments, the optional command no data response may include an optional command no data response condition field configured to indicate a condition for which the optional command terminal device responds to the optional command with the optional command optional no data response. The term "optional command no data response condition field" is used herein to refer to a read optional no data response condition field and/or a write optional no data response condition field.

The terms "computing device" and "mobile computing device" are used interchangeably herein to refer to any one or all of cellular telephones, smartphones, personal or mobile multi-media players, personal data assistants (PDA's), laptop computers, tablet computers, convertible laptops/tablets (2-in-1 computers), smartbooks, ultrabooks, netbooks, palm-top computers, wireless electronic mail receivers, multimedia Internet enabled cellular telephones, mobile gaming consoles, wireless gaming controllers, and similar personal electronic devices that include a memory, and a programmable processor. The term "computing device" may further refer to stationary computing devices including personal computers, desktop computers, all-in-one computers, workstations, super computers, mainframe computers, embedded computers (such as in vehicles and other larger systems), servers, multimedia computers, and game consoles.

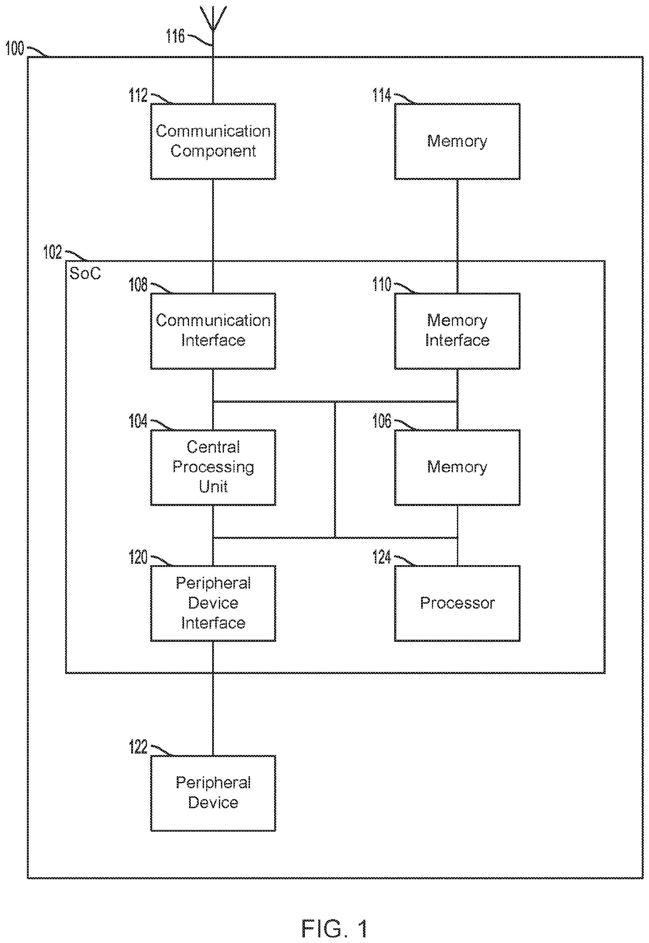

FIG. 1 illustrates a system including a computing device 100 suitable for use with various embodiments. The computing device 100 may include an SoC 102 with a central processing unit 104, a memory 106, a communication interface 108, a memory interface 110, a peripheral device interface 120, and a processing device 124. The computing device 100 may further include a communication component 112, such as a wired or wireless modem, a memory 114, an antenna 116 for establishing a wireless communication link, and/or a peripheral device 122. The processor 124 may include any of a variety of processing devices, for example a number of processor cores.

The term "system-on-chip" or "SoC" is used herein to refer to a set of interconnected electronic circuits typically, but not exclusively, including a processing device, a memory, and a communication interface. A processing device may include a variety of different types of processors 124 and/or processor cores, such as a general purpose processor, a central processing unit (CPU) 104, a digital signal processor (DSP), a graphics processing unit (GPU), an accelerated processing unit (APU), a secure processing unit (SPU), an intellectual property unit (IPU), a subsystem processor of specific components of the computing device, such as an image processor for a camera subsystem or a display processor for a display, an auxiliary processor, a peripheral device processor, a single-core processor, a multicore processor, a controller, and/or a microcontroller. A processing device may further embody other hardware and hardware combinations, such as a field programmable gate array (FPGA), an application-specific integrated circuit (ASIC), other programmable logic device, discrete gate logic, transistor logic, performance monitoring hardware, watchdog hardware, and/or time references. Integrated circuits may be configured such that the components of the integrated circuit reside on a single piece of semiconductor material, such as silicon.

An SoC 102 may include one or more CPUs 104 and processors 124. The computing device 100 may include more than one SoC 102, thereby increasing the number of CPUs 104, processors 124, and processor cores. The computing device 100 may also include CPUs 104 and processors 124 that are not associated with an SoC 102. Individual CPUs 104 and processors 124 may be multicore processors. The CPUs 104 and processors 124 may each be configured for specific purposes that may be the same as or different from other CPUs 104 and processors 124 of the computing device 100. One or more of the CPUs 104, processors 124, and processor cores of the same or different configurations may be grouped together. A group of CPUs 104, processors 124, or processor cores may be referred to as a multi-processor cluster.

The memory 106 of the SoC 102 may be a volatile or non-volatile memory configured for storing data and processor-executable code for access by the CPU 104, the processor 124, or other components of SoC 102. The computing device 100 and/or SoC 102 may include one or more memories 106 configured for various purposes. One or more memories 106 may include volatile memories such as random access memory (RAM) or main memory, or cache memory. These memories 106 may be configured to temporarily hold a limited amount of data received from a data sensor or subsystem, data and/or processor-executable code instructions that are requested from non-volatile memory, loaded to the memories 106 from non-volatile memory in anticipation of future access based on a variety of factors, and/or intermediary processing data and/or processor-executable code instructions produced by the CPU 104 and/or processor 124 and temporarily stored for future quick access without being stored in non-volatile memory. In some embodiments, any number and combination of memories 106 may include one-time programmable or read-only memory.

The memory 106 may be configured to store data and processor-executable code, at least temporarily, that is loaded to the memory 106 from another memory device, such as another memory 106 or memory 114, for access by one or more of the CPU 104, the processor 124, or other components of SoC 102. The data or processor-executable code loaded to the memory 106 may be loaded in response to execution of a function by the CPU 104, the processor 124, or other components of SoC 102. Loading the data or processor-executable code to the memory 106 in response to execution of a function may result from a memory access request to the memory 106 that is unsuccessful, or a "miss," because the requested data or processor-executable code is not located in the memory 106. In response to a miss, a memory access request to another memory 106 or memory 114 may be made to load the requested data or processor-executable code from the other memory 106 or memory 114 to the memory 106. Loading the data or processor-executable code to the memory 106 in response to execution of a function may result from a memory access request to another memory 106 or memory 114, and the data or processor-executable code may be loaded to the memory 106 for later access.

The memory interface 110 and the memory 114 may work in unison to allow the computing device 100 to store data and processor-executable code on a volatile and/or non-volatile storage medium, and retrieve data and processor-executable code from the volatile and/or non-volatile storage medium. The memory 114 may be configured much like an embodiment of the memory 106 in which the memory 114 may store the data or processor-executable code for access by one or more of the CPU 104, the processor 124, or other components of SoC 102.

In some embodiments, the memory 114 may be non-volatile and thus may retain the information after the power of the computing device 100 is shut off. When the power is turned back on and the computing device 100 reboots, the information stored on the memory 114 may be available to the computing device 100.

In some embodiments, the memory 114 may be volatile, and thus will not retain the information after the power of the computing device 100 is shut off. The memory interface 110 may control access to the memory 114 and allow the CPU 104, the processor 124, or other components of the SoC 102 to read data from and write data to the memory 114.

Some or all of the components of the computing device 100 and/or the SoC 102 may be arranged differently and/or combined while still serving the functions of the various embodiments. The computing device 100 may not be limited to one of each of the components, and multiple instances of each component may be included in various configurations of the computing device 100.

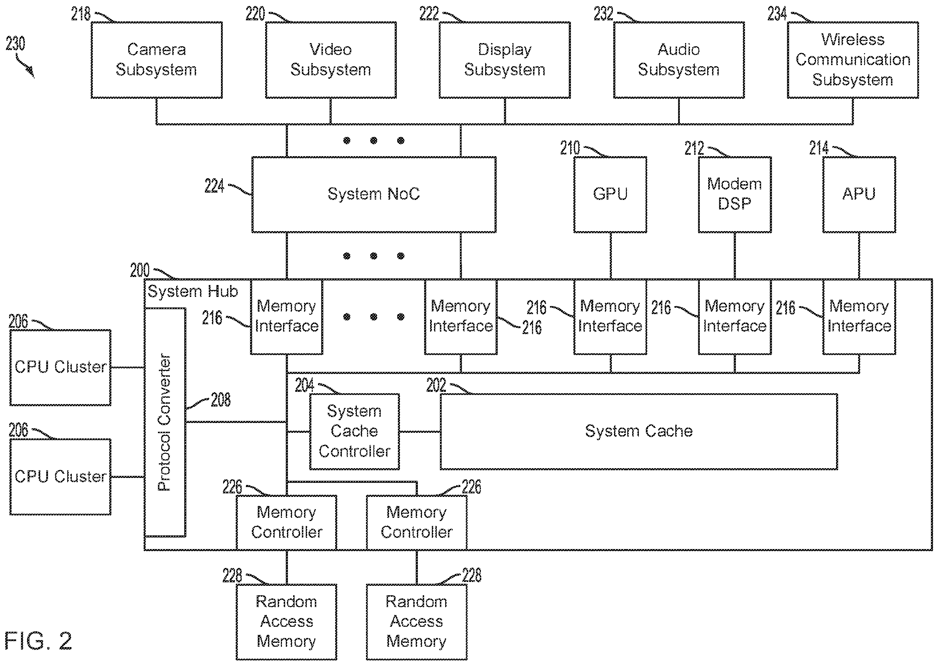

FIG. 2 illustrates an SoC 230 (e.g., SoC 102 in FIG. 1), which may be a component of a computing device (e.g., computing device 100 in FIG. 1) with multiple peripheral device components suitable for implementing an embodiment. With reference to FIGS. 1 and 2, the SoC 230 may include a variety of components as described above. Some such components and additional components may be subsystems of the computing device 100.

The SoC 230 may include various communication components (e.g., communication interface 108, memory interface 110, peripheral device interface 120 in FIG. 1) configured to communicatively connect the components of the SoC 230 that may transmit, receive, and share data. The communication components may include a system hub 200, a protocol converter 208, and a system network on chip (NoC) 224.

The communication components may facilitate communication between subsystem components. In some embodiments, the subsystem components may include processors (e.g., CPU 104, processor(s) 124 in FIG. 1) in CPU clusters 206. In some embodiments, the subsystem components may include various peripheral device subsystems (e.g., communication component 112, peripheral device 122 in FIG. 1) having one or more processors (e.g., CPU 104, processor(s) 124 in FIG. 1), such as camera, video, display, audio, and wireless communication subsystems 218, 220, 222, 232, 234. In some embodiments, the subsystem components may include other specialized processors (e.g., processor(s) 124 in FIG. 1), such as a graphics processor unit (GPU) 210, a modem digital signal processor (DSP) 212, an application processor unit (APU) 214, and other hardware accelerators.

The communication components may facilitate communication between the peripheral device subsystems 218, 220, 222, 232, 234 and the processors 206, 210, 212, 214 with other components such as memory devices (e.g., memory 106, 114 in FIG. 1), including a system cache 202, a random access memory (RAM) 228, and various memories included in the processors 206, 210, 212, 214 and peripheral device subsystems 218, 220, 222, 232, 234, such as cache memories.

Various memory control devices (e.g., memory interface 110 in FIG. 1), such as a system cache controller 204, a memory interface 216, and a memory controller 226, may be configured to control access to the various memories by the peripheral device subsystems 218, 220, 222, 232, 234 and the processors 206, 210, 212, 214 and implement operations for the various memories, which may be requested by the peripheral device subsystems 218, 220, 222, 232, 234 and the processors 206, 210, 212, 214.

The peripheral device subsystems 218, 220, 222, 232, 234 may also include various processors (e.g., CPU 104, processor(s) 124 in FIG. 1), controllers (e.g., processor(s) 124 in FIG. 1), sensors, receivers, transmitters, and dedicated memories, such as caches and memory registers, configured for controlling and implementing functionalities of the peripheral devices of the subsystems 218, 220, 222, 232, 234.

The descriptions herein of the SoC 230 and its various components illustrated in FIG. 2 are only meant to be examples and in no way limiting. Several of the components of the illustrated example SoC 230 may be variably configured, combined, and separated. Several of the components may be included in greater or fewer numbers and may be located and connected differently within the SoC 230 or separate from the SoC 230. Similarly, numerous other components, such as other memories, processors, peripheral device subsystems, interfaces, and controllers, may be included in the SoC 230.

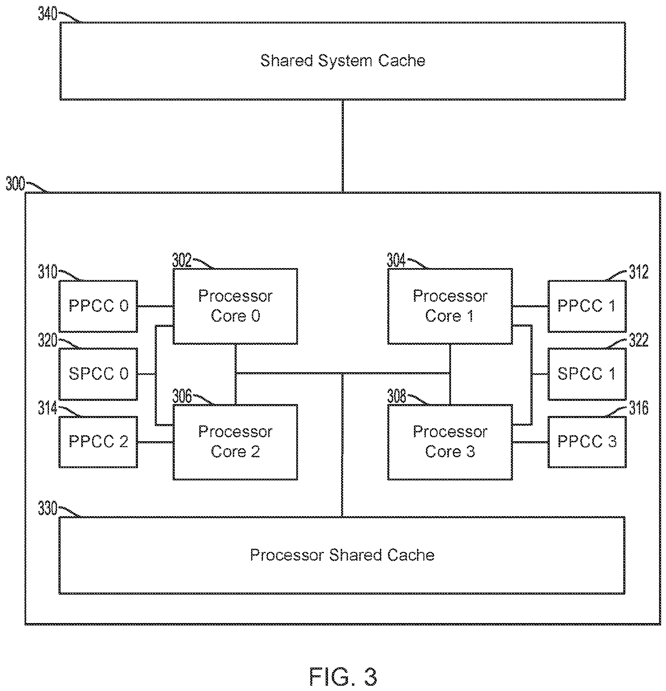

FIG. 3 illustrates components of a computing device (e.g., computing device 100 in FIG. 1) suitable for implementing an embodiment. With reference to FIGS. 1-3, a processor 300 (e.g., central processing unit 104, processor 124 in FIG. 1, CPU clusters 206, GPU 210, DSP 212, APU 214 in FIG. 2) may include multiple processor types, including, for example, a CPU and various hardware accelerators, such as a GPU, a DSP, an SPU, an APU, an IPU, a subsystem processor of specific components of the computing device, an auxiliary processor, a peripheral device processor, controllers/microcontrollers, etc.

The processor 300 may also include a custom hardware accelerator, which may include custom processing hardware and/or general purpose hardware configured to implement a specialized set of functions. The processors 300 may include any number of processor cores 302, 304, 306, 308. A processor 300 having multiple processor cores 302, 304, 306, 308 may be referred to as a multicore processor.

The processor 300 may have a plurality of homogeneous or heterogeneous processor cores 302, 304, 306, 308. A homogeneous processor may include a plurality of homogeneous processor cores. The processor cores 302, 304, 306, 308 may be homogeneous in that, the processor cores 302, 304, 306, 308 of the processor 300 may be configured for the same purpose and have the same or similar performance characteristics. For example, the processor 300 may be a general purpose processor, and the processor cores 302, 304, 306, 308 may be homogeneous general purpose processor cores. The processor 300 may be a GPU or a DSP, and the processor cores 302, 304, 306, 308 may be homogeneous graphics processor cores or digital signal processor cores, respectively. The processor 300 may be a custom hardware accelerator with homogeneous processor cores 302, 304, 306, 308.

A heterogeneous processor may include a plurality of heterogeneous processor cores. The processor cores 302, 304, 306, 308 may be heterogeneous in that the processor cores 302, 304, 306, 308 of the processor 300 may be configured for different purposes and/or have different performance characteristics. The heterogeneity of such heterogeneous processor cores may include different instruction set architecture, pipelines, operating frequencies, etc. An example of such heterogeneous processor cores may include what are known as "big.LITTLE" architectures in which slower, low-power processor cores may be coupled with more powerful and power-hungry processor cores. In similar embodiments, an SoC (for example, SoC 122 of FIG. 1, SoC 230 in FIG. 2) may include any number of homogeneous or heterogeneous processors 300. In various embodiments, not all off the processor cores 302, 304, 306, 308 need to be heterogeneous processor cores, as a heterogeneous processor may include any combination of processor cores 302, 304, 306, 308 including at least one heterogeneous processor core.

Each of the processor cores 302, 304, 306, 308 of a processor 300 may be designated a private processor core cache (PPCC) memory 310, 312, 314, 316 that may be dedicated for read and/or write access by a designated processor core 302, 304, 306, 308. The private processor core cache 310, 312, 314, 316 may store data and/or instructions, and make the stored data and/or instructions available to the processor cores 302, 304, 306, 308, to which the private processor core cache 310, 312, 314, 316 is dedicated, for use in execution by the processor cores 302, 304, 306, 308. The private processor core cache 310, 312, 314, 316 may include volatile memory. The private processor core cache 310, 312, 314, 316 may a physical cache and/or a virtual cache.

Groups of the processor cores 302, 304, 306, 308 of a processor 300 may be designated a shared processor core cache (SPCC) memory 320, 322 that may be dedicated for read and/or write access by a designated group of processor core 302, 304, 306, 308. The shared processor core cache 320, 322 may store data and/or instructions, and make the stored data and/or instructions available to the group processor cores 302, 304, 306, 308 to which the shared processor core cache 320, 322 is dedicated, for use in execution by the processor cores 302, 304, 306, 308 in the designated group. The shared processor core cache 320, 322 may include volatile memory.

The processor 300 may include a shared processor cache memory 330 that may be dedicated for read and/or write access by the processor cores 302, 304, 306, 308 of the processor 300. The shared processor cache 330 may store data and/or instructions, and make the stored data and/or instructions available to the processor cores 302, 304, 306, 308, for use in execution by the processor cores 302, 304, 306, 308. The shared processor cache 330 may also function as a buffer for data and/or instructions input to and/or output from the processor 300. The shared cache 330 may include volatile memory.

Multiple processors 300 may access a shared system cache memory 340 (e.g., memory 106 in FIG. 1, system cache 202 in FIG. 2) that may be dedicated for read and/or write access by the processor cores 302, 304, 306, 308 of the multiple processors 300. The shared system cache 340 may store data and/or instructions and make the stored data and/or instructions available to the processor cores 302, 304, 306, 308, for use in execution by the processor cores 302, 304, 306, 308. The shared system cache 340 may also function as a buffer for data and/or instructions input to and/or output from the multiple processors 300. The shared system cache 340 may include volatile memory.

The example illustrated in FIG. 3 showing the four processor cores 302, 304, 306, 308, the four private processor core caches 310, 312, 314, 316, two groups of processor cores 302, 304, 306, 308 and the shared processor core caches 320, 322, the one processor shared cache 320, and the one shared system cache 340 is not meant to limit the various embodiments to these specific numbers of components. The computing device 100, the SoC 102, or the processor 300 may individually or in combination include fewer or more than the four processor cores 302, 304, 306, 308, four private processor core caches 310, 312, 314, 316, and two shared processor core caches 320, 322, one processor shared cache 320, and/or one shared system cache 340 as illustrated and described herein.

For ease of reference, the terms "processor," "multicore processor," "processor core," "controller," and "microcontroller" may be used interchangeably herein. The descriptions herein of the illustrated computing device and its various components are only meant to be exemplary and not to be limiting. Several of the components of the illustrated example computing device may be variably configured, combined, and separated. Several of the components may be included in greater or fewer numbers and may be located and connected differently within the SoC or separate from the SoC.

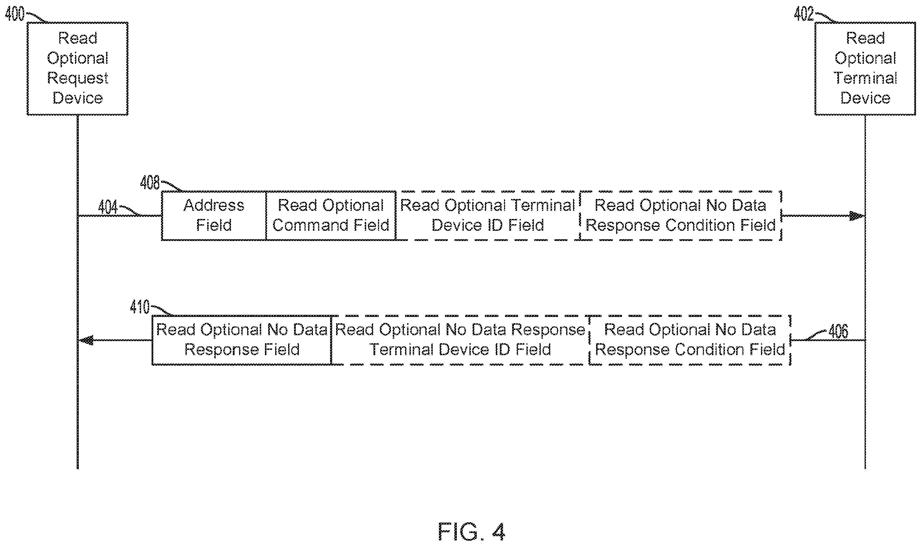

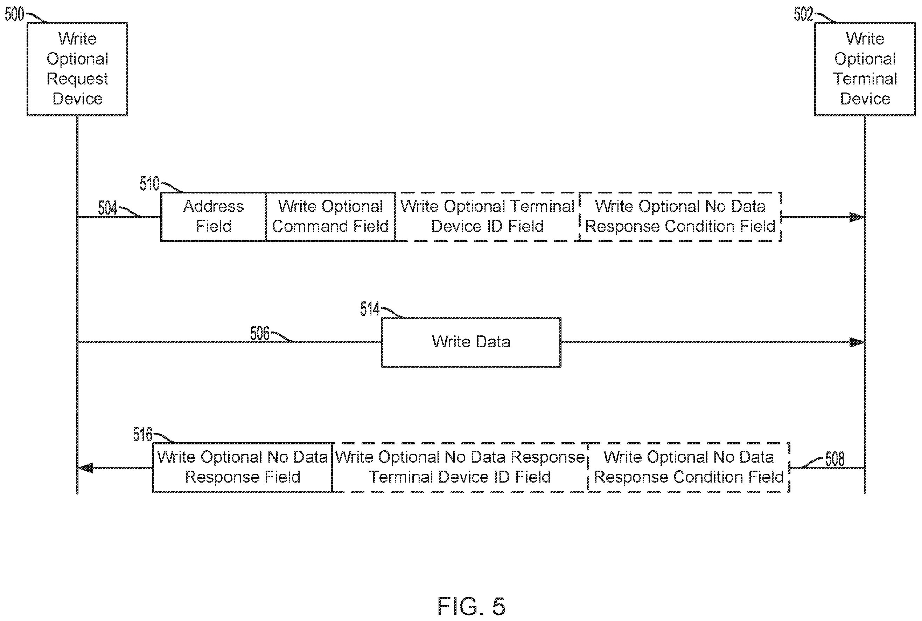

FIGS. 4 and 5 illustrate examples of a read optional command 408 and a read optional no data response 410 in FIG. 4, and a write optional command 510 and a write optional no data response 516 in FIG. 5. With reference to FIGS. 1-5, each of the read optional command 408, the read optional no data response 410, the write optional command 510, and the write optional no data response 516 may be represented as ordered bits. Each bit or group of bits in the order of the read optional command 408 and the write optional command 510 may be configured to indicate certain information to a terminal device (e.g., CPU 104, memory 106, communication interface 108, memory interface 110, peripheral device interface 120, processor 124 in FIG. 1, system hub 200, system cache 202, cache controller 204, protocol converter 208, processors 206, 210, 212, 214, memory interface 216, subsystems 218, 220, 222, 232, 234, NoC 224, memory controller 226 in FIG. 2, processor 300, processor cores 302, 304, 306, 308, processor core caches 310, 312, 314, 316, shared processor core caches 320, 322, processor shared cache 320, shared system cache 340 in FIG 3), read optional terminal device 402 and/or write optional terminal device 502. Each bit or group of bits in the order of the read optional no data response 410 and the write optional no data response 516 may be configured to indicate certain information to a request device (e.g., CPU 104, processor 124 in FIG. 1, CPU clusters 206, GPU 210, DSP 212, APU 214, subsystems 218, 220, 222, 232, 234 in FIG. 2, processor 300, processor cores 302, 304, 306, 308 in FIG 3), read optional request device 400 and/or write optional request device 500. In the examples illustrated in FIGS. 4 and 5, portions of the read optional command 408, the read optional no data response 410, the write optional command 510, and the write optional no data response 516 shown using broken lines are information that may optionally be included in any combination in the commands 408, 510 and/or responses 410, 516.

In some embodiments, to implement the read optional command 408 and/or the write optional command 510, a bit order for an existing read and/or write command of a bus protocol may be modified to indicate to read optional terminal device 402 and/or write optional terminal device 502 that the bit order is for the read optional command 408 and/or the write optional command 510.

In some embodiments, to implement the read optional command 408 and/or the write optional command 510, a bus protocol may be updated with a new bit order that may be used to indicate to read optional terminal device 402 and/or write optional terminal device 502 that the bit order is for the read optional command 408 and/or the write optional command 510.

In some embodiments, to implement the read optional command 408 and/or the write optional command 510, an instruction set architecture (ISA) may be updated to generate a new bit order that may be used to indicate to read optional terminal device 402 and/or write optional terminal device 502 that the bit order is for the read optional command 408 and/or the write optional command 510.

A bit and/or groups of bits configured to indicate certain information to a read optional request device 400, read optional terminal device 402, write optional request device 500, write optional terminal device 502 may be referred to herein as a "field." The read optional command 408 may include an address field configured to indicate a target data and/or location for the read optional command 408. The read optional command 408 may include a read optional command field configured to indicate the type of the command. In some embodiments, the read optional command 408 may include a read optional terminal device ID field configured to indicate which one or more of read optional terminal devices 402 may respond to the read optional command 408 with the read optional no data response 410. In some embodiments, the read optional command 408 may include a read optional no data response condition field configured to indicate one or more conditions for which the read optional terminal devices 402 may respond to the read optional command 408 with the read optional no data response 410.

In some embodiments the read optional terminal device ID and/or the read optional no data response condition may be inherent to the read optional command 408 and may not need to be explicitly added as values in the read optional terminal device ID field and/or the read optional no data response condition field. For example, a read optional terminal device 402 may be configured to respond to the read optional command 408 under certain conditions without the read optional command 408 having the read optional terminal device ID field and/or the read optional no data response condition field.

The read optional no data response 410 may include a read optional no data response field configured to indicate the type of the response. In some embodiments, the read optional no data response 410 may include a read optional no data response terminal device ID field configured to indicate which read optional terminal device 402 responds to the read optional command 408 with the read optional no data response 410. In some embodiments, the read optional no data response 410 may include a read optional no data response condition field configured to indicate a condition for which the read optional terminal device 402 responds to the read optional command 408 with the read optional no data response 410.

The write optional command 510 may include an address field configured to indicate a target data and/or location for the write optional command 510. The write optional command 510 may include a write optional command field configured to indicate the type of the command. In some embodiments, the write optional command 510 may include a write optional terminal device ID field configured to indicate which one or combination of write optional terminal devices 502 may respond to the write optional command 510 with the write optional no data response 516. In some embodiments, the write optional command 510 may include a write optional no data response condition field configured to indicate one or more conditions for which the write optional terminal devices 502 may respond to the write optional command 510 with the write optional no data response 516.

In some embodiments the write optional terminal device ID and/or the write optional no data response condition may be inherent to the write optional command 510 and may not need to be explicitly added as values in the write optional terminal device ID field and/or the write optional no data response condition field. For example, a write optional terminal device 502 may be configured to respond to the write optional command 510 under certain conditions without the write optional command 510 having the write optional terminal device ID field and/or the write optional no data response condition field

The write optional no data response 516 may include a write optional no data response field configured to indicate the type of the response. In some embodiments, the write optional no data response 516 may include a write optional no data response terminal device ID field configured to indicate which write optional terminal device 502 responds to the write optional command 510 with the write optional no data response 516. In some embodiments, the write optional no data response 516 may include a write optional no data response condition field configured to indicate a condition for which the write optional terminal device 502 responds to the write optional command 510 with the write optional no data response 516.

The read optional command 408 and/or the write optional command 510 may be commands specifically configured to indicate to the read optional terminal devices 402 and/or the write optional terminal devices 502 that the terminal devices 402, 502 may respond to the commands 408, 510 with the read optional no data response 410 and/or the write optional no data response 516. The read optional no data response 410 and/or the write optional no data response 516 may be architected responses specifically for use in response to read optional command 408 and/or the write optional command 510. The read optional no data response 410 and/or the write optional no data response 516 may be different from and in addition to error or failure signaling, in which the read optional terminal device 402 and/or write optional terminal device 502 may forward the read optional command 408 and/or the write optional command 510 and/or hold the command 408, 510 until the command 408, 510 can be implemented. The read optional no data response 410 and/or the write optional no data response 516 may indicate to the read optional request device 400 and/or write optional request device 500 that the read optional command 408 and/or the write optional command 510 is not implemented and the request device 400, 500.

The read optional no data response 410 and/or the write optional no data response 516 may be an acceptable state, such as "OK" state, for the read optional request device 400 and/or write optional request device 500, rather than an error or fault state triggered by an error or fault signal for failure of a memory access request. Not implementing the read optional command 408 and/or the write optional command 510 may be an acceptable state in that the implementation of the command 408, 510 may not be required, for example, even when the implementing the command 408, 510 may be critical. As such, not implementing the read optional command 408 and/or the write optional command 510 may not be an error or fault state triggered by an error or fault signal that may be configured to indicate no, incomplete, improper, etc. implementation of a required memory access.

The read optional request device 400 and/or write optional request device 500 may be configured to retry and/or abandon the command 408, 510 in response. In some embodiments, the read optional request device 400 and/or write optional request device 500 may be preconfigured with how to respond to the read optional no data response 410 and/or the write optional no data response 516. In some embodiments, the read optional request device 400 and/or write optional request device 500 may determine how to respond to the read optional no data response 410 and/or the write optional no data response 516.

The read optional no data response 410 and/or the write optional no data response 516 may be issued by any or specific read optional terminal devices 402 and/or write optional terminal devices 502 along a transaction path between the read optional request device 400 and/or write optional request device 500 and a main memory (e.g., memory 104 in FIG. 1, random access memory 228 in FIG. 2). The read optional no data response 410 and/or the write optional no data response 516 may be issued based on one or more conditions, as described further herein. In some embodiments, the read optional no data response 410 and/or the write optional no data response 516 may indicate to the read optional request device 400 and/or write optional request device 500 the read optional terminal devices 402 and/or the write optional terminal devices 502 issuing the no data response 410, 516.

In some embodiments, the read optional no data response 410 and/or the write optional no data response 516 may indicate to the read optional request device 400 and/or write optional request device 500 the condition for the no data response 410, 516. In some embodiments, a response of the read optional request device 400 and/or write optional request device 500 to the read optional no data response 410 and/or the write optional no data response 516 may depend on the read optional terminal devices 402 and/or the write optional terminal devices 502 issuing the read optional no data response 410 and/or the write optional no data response 516 and/or the condition for issuing the no data response 410, 516.

In some embodiments, the read optional command 408 and the read optional no data response 410 may be used to avoid costly work. For example, the read optional command 408 and the read optional no data response 410 may be used to avoid infinite loops or livelocks for data that may be repeatedly fetched from main memory but repeatedly evicted before use. For a more specific example, a data prefetcher may receive the read optional command 408 and issue a read optional no data response 410 in response to requested data not being in a cache, rather than respond by fetching the missing data from main memory. In this manner, the prefetcher may not repeatedly fetch data from main memory that is evicted before it is used, and the read optional request device 400 may be configured to abandon the request or reissue the request in a timely manner to use the data. As another example, a data prefetcher may generate the read optional command 408 for fetching data. In some embodiments, the data prefetcher may generate the read optional command 408 by default and/or by an algorithm. For example, an algorithm for generating the read optional command 408 may be based on an expected probability of use of fetched data. The algorithm may prompt generating the read optional command 408 in response to a probability exceeding and/or falling short of a read optional command generation threshold. In some embodiments, the data prefetcher configured to generate a read optional command 408 may not be integrated with a cache targeted by the read optional command 408, and may send the read optional command 408 to the targeted cache.

In some embodiments, the read optional command 408 may include a value in the read optional terminal device ID field configured to indicate to the prefetcher that the prefetcher may respond with the read optional no data response 410. In some embodiments, the read optional command 408 may include a value in the read optional no data response condition field to indicate to a read optional terminal device 402 to issue the read optional no data response 410 in response to requested data missing from the cache.

For another example, the read optional command 408 and the read optional no data response 410 may be used to avoid excessive, incorrect, and/or disallowed data reads by being used as an out of bounds check, such as for an image buffer without knowing valid ranges. In such an example, a read optional command 408 may be issued to retrieve data from an image buffer. In response to the requested data being out of bounds for the image buffer, a read optional terminal device 402 having information of the buffer ranges may respond to the read optional command 408 with the read optional no data response 410, rather than retrieving the requested data from a device further down the transaction path. As such, costly repetitive and/or improper data reads may be avoided. The read optional terminal device 402 having information of the buffer ranges may include a memory controller, a system memory management unit (SMMU), a cache, and/or other specialized functional blocks. In some embodiments, the read optional command 408 may include a value in the read optional terminal device ID field configured to indicate to the read optional terminal device 402 that the read optional terminal device 402 may respond with the read optional no data response 410. In some embodiments, the read optional command 408 may include a value in the read optional no data response condition field to indicate to a read optional terminal device 402 to issue the read optional no data response 410 in response to requested data being out of bounds for the image buffer.

Similarly, the write optional command 510 and the write optional no data response 516 may be used to avoid excessive, incorrect, and/or disallowed data writes by being used as an out of bounds check, such as for an image buffer without knowing valid ranges. In such an example, a write optional command 510 may be issued to write data to an image buffer. In response to the requested write location being out of bounds for the image buffer, a write optional terminal device 502 having information of the buffer ranges may respond to the write optional command 510 with the write optional no data response 516, rather than writing the requested data to a location of a memory out of bounds for the image buffer. As such, costly and/or improper writes may be avoided. The write optional terminal device 502 having information of the buffer ranges may include a memory controller, a system memory management unit (SMMU), a cache, and/or other specialized functional blocks. In some embodiments, the write optional command 510 may include a value in the write optional terminal device ID field configured to indicate to the write optional terminal device 502 that the write optional terminal device 502 may respond with the write optional no data response 516. In some embodiments, the write optional command 510 may include a value in the write optional no data response condition field to indicate to a write optional terminal device 502 to issue the write optional no data response 516 in response to a requested data write location being out of bounds for the image buffer.

As another example, the read optional command 408 and the read optional no data response 410 may be used to avoid costly work based on the cost of the work. For example, certain operations may have associated costs and an individual cost of an operation and/or a cumulative cost of operations for implementing the read optional command 408 may exceed a cost threshold. Such operations may include read operations, fetch operations, memory management operations, memory coherency operations, etc. Cost may be measured, for example, on a basis of any number and combination of power, time, cycles, bandwidth, resource requirement, effect on latency for other operations, etc. The read optional terminal device 402 may be configured to determine a cost for implementing the read optional command 408 and compare the cost to the cost threshold. The read optional terminal device 402 may implement the read optional command 408 in response to the cost of implementing the read optional command 408 does not exceed the cost threshold, and not implement the read optional command 408 in response to the cost of implementing the read optional command 408 exceeding the cost threshold. In some embodiments, the cost threshold for the read optional command 408 may be inherent for the read optional command 408. In some embodiments, the read optional command 408 may include a value in the read optional no data response condition field to indicate to a read optional terminal device 402 to issue the read optional no data response 410 in response to the cost of implementing the read optional command 408 exceeding the cost threshold. In some embodiments, the read optional command 408 may include a value in the read optional no data response condition field to indicate to a read optional terminal device 402 a value of the cost threshold.

Similarly, the write optional command 510 and the write optional no data response 516 may be used to avoid costly work based on the cost of the work. For example, certain operations may have associated costs and an individual cost of an operation and/or a cumulative cost of operations for implementing the write optional command 510 may exceed a cost threshold. Such operations may include write operations, memory management operations, memory coherency operations, etc. Cost may be measured, for example, on a basis of any number and combination of power, time, cycles, bandwidth, resource requirement, effect on latency for other operations, etc. The write optional terminal device 502 may be configured to determine a cost for implementing the write optional command 510 and compare the cost to the cost threshold. The write optional terminal device 502 may implement the write optional command 510 in response to the cost of implementing the write optional command 510 does not exceed the cost threshold, and not implement the write optional command 510 in response to the cost of implementing the write optional command 510 exceeding the cost threshold. In some embodiments, the cost threshold for the write optional command 510 may be inherent for the write optional command 510. In some embodiments, the write optional command 510 may include a value in the write optional no data response condition field to indicate to a write optional terminal device 502 to issue the write optional no data response 516 in response to the cost of implementing the write optional command 510 exceeding the cost threshold. In some embodiments, the write optional command 510 may include a value in the write optional no data response condition field to indicate to a write optional terminal device 502 a value of the cost threshold.

In some embodiments, the read optional command 408 and the read optional no data response 410 may be used to avoid exceptions, errors, and/or faults. The read optional terminal device 402 may determine that implementing the read optional command 408 may result in an exception, error, and/or fault. In response to determining that implementing the read optional command 408 may result in an exception, error, and/or fault, the read optional terminal device 402 may not implement the read optional command 408 and return a read optional no data response 410. Not implementing the read optional command 408 may avoid an exception, error, and/or fault resulting from implementing the read optional command 408. For example, the read optional terminal device 402 may determine that implementing the read optional command 408 may result in a page fault. In response to determining that implementing the read optional command 408 may result in a page fault, the read optional terminal device 402 may not implement the read optional command 408 and return a read optional no data response 410. In some embodiments, the read optional command 408 may include a value in the read optional no data response condition field to indicate to a read optional terminal device 402 to issue the read optional no data response 410 in response to determining that implementing the read optional command 408 may result in an exception, error, and/or fault.

Similarly, in some embodiments, the write optional command 510 and the write optional no data response 516 may be used to avoid exceptions, errors, and/or faults. The write optional terminal device 502 may determine that implementing the write optional command 510 may result in an exception, error, and/or fault. In response to determining that implementing the write optional command 510 may result in an exception, error, and/or fault, the write optional terminal device 502 may not implement the write optional command 510 and return a write optional no data response 516. Not implementing the write optional command 510 may avoid an exception, error, and/or fault resulting from implementing the write optional command 510. For example, the write optional terminal device 502 may determine that implementing the write optional command 510 may result in a page fault. In response to determining that implementing the write optional command 510 may result in a page fault, the write optional terminal device 502 may not implement the write optional command 510 and return a write optional no data response 516. In some embodiments, the write optional command 510 may include a value in the write optional no data response condition field to indicate to a write optional terminal device 502 to issue the write optional no data response 516 in response to determining that implementing the write optional command 510 may result in an exception, error, and/or fault.

In some embodiments, the read optional command 408 and the read optional no data response 410 may be used to free resources that may otherwise be held until a process completes. For example, a GPU may issue a read optional command 408 to request image data from a memory that may be configured to load partially resident textures. The memory may include a cache, a random access memory (RAM), such as a double data rate (DDR) RAM, etc. In response to the requested data missing from the memory, a memory controller may respond to the read optional command 408 with the read optional no data response 410, rather than holding the request until the data is retrieved and written to the memory. In such an example, the read optional command 408 may complete and resources may be released, such as threads, cores, memories, NoC bandwidth, transaction storage/buffering and tracking capacity, etc. that were to be used process the requested data, and allow other processes to be implemented. In addition, the memory controller may fetch the requested data and the GPU may reissue the read optional command 408 to request the data at a later time. As such, resources may be freed for use while missing data is retrieved, rather than stalling execution of other processes while waiting for the data to be retrieved.

Similarly, in some embodiments, the write optional command 510 and the write optional no data response 516 may be used to free resources that would otherwise be held until a process completes. For example, a GPU may issue a write optional command 510 to request writing image data to a memory that may be configured to store partially resident textures. The memory may include a cache, a RAM, such as DDR RAM, etc. In response to the memory being full, a memory controller may respond to the write optional command 510 with the write optional no data response 516, rather than holding the request until the space is available in the memory to write the data and the data is written to the memory. In such an example, the write optional command 510 may complete and resources may be released, such as threads, cores, memories, NoC bandwidth, etc. that were to be used to process the data write, and allow other processes to be implemented. In addition, the memory controller may clear space in the memory and the GPU may reissue the write optional command 510 to request to write the data at a later time. As such, resources may be freed for use while space in the memory is unavailable, rather than stalling execution of other processes while waiting for space in the memory to become available.

In some embodiments, the read optional command 408 may include a value in the read optional terminal device ID field configured to indicate to the memory controller that the memory controller may respond with the read optional no data response 410. In some embodiments, the read optional command 408 may include a value in the read optional no data response condition field to indicate to a read optional terminal device 402 to issue the read optional no data response 410 in response to requested data missing from the cache.

In some embodiments, the read optional command 408 and the read optional no data response 410 and/or the write optional command 510 and the write optional no data response 516 may be used to improve data streaming between consumer and procedure processing devices by avoiding writes to main memory and synchronization operations between processing devices. For example, processing devices may share streamed data by writing and reading the streamed data in a shared buffer, such as in a cache. A consumer processing device issuing a read optional command 408 for streamed data in the shared buffer may receive a read optional no data response 410 from a memory controller in response to the data not yet being written to the cache by the producer processing device. The consumer processing device may retry the read optional command 408 for streamed data until the data appears in the shared buffer. As such, the memory controller avoids having to issue read commands to the main memory for a miss of data in the shared buffer in response to the consumer processor's read optional command 408. A producer processing device issuing a write optional command 510 for streamed data in the shared buffer may receive a write optional data response 516 from a memory controller in response to the shared buffer and/or cache being full. The producer processing device may retry the write optional command 510 for streamed data until the data is added to the shared buffer. As such, the memory controller avoids having to evict data from the shared buffer and issue write commands to the main memory for the data in the shared buffer in response to the producer processor's write optional command 510.

In some embodiments, the shared buffer memory controller may provide additional data to the consumer processor to improve timing of the reissue of the read optional command 408, such as by including a last written address, a delta to a current address, or timing information. In some embodiments, the consumer producer may have a smaller synchronization granularity - slice-based rather than frame-based communication - and the consumer processor may not have to synchronize at frame boundaries. In some embodiments, data streaming could be part of page table attributes and a memory controller may convert normal reads commands from a consumer processor to read optional commands 408, and perform retries of the read optional commands 408 until the data is available in the shared buffer.

In some embodiments, the read optional command 408 and the read optional no data response 410 and/or the write optional command 510 and the write optional no data response 516 may be used to implement secure data transactions. For example, where hardware and/or software does not know whether it is operating securely, the read optional command 408 and/or the write optional command 510 could be used to access possibly secure buffers and return the read optional no data response 410 and/or the write optional no data response 516 without faulting. For another example, not implementing the read optional command 408 and/or the write optional command 510 may be based on permissions not allowing the read optional request device 400, write optional request device 500, a user, a processes, an application, etc. issuing the read optional command 408 and/or the write optional command 510 access to read and/or write. In some embodiments, the read optional command 408 may include a value in the read optional no data response condition field to indicate to a read optional terminal device 402 to issue the read optional no data response 410 in response to being denied access to a requested location and/or target data. In some embodiments, the write optional command 510 may include a value in the write optional no data response condition field to indicate to a write optional terminal device 502 to issue the write optional no data response 516 in response to being denied access the requested location.

The example in FIG. 4 illustrates a read optional command 408 and read optional no data response 410 transaction. The read optional request device 400 may transmit the read optional command 408 to the read optional terminal device 402. In some embodiments, the read optional command 408 may be transmitted via an existing read address and/or command channel 404 of an existing bus protocol. In some embodiments, the read optional command 408 may include the read optional terminal device ID field. In some embodiments, the read optional command 408 may include the read optional no data response condition field. The read optional terminal device 402 may receive the read optional command 408.

The read optional terminal device 402 may determine that it is a read optional terminal device 402 for the read optional command 408. In some embodiments, the read optional terminal device 402 may be configured as a read optional terminal device 402 for the read optional command 408. In some embodiments, the read optional terminal device 402 may interpret that it is a read optional terminal device 402 for the read optional command 408 from the read optional terminal device ID field. The read optional terminal device 402 may determine that it may terminate the read optional command 408 based on a condition for terminating the read optional command 408. In some embodiments, the read optional terminal device 402 may be configured to determine that it may terminate the read optional command 408 based on a condition for terminating the read optional command 408. In some embodiments, the read optional terminal device 402 may interpret and determine that it may terminate the read optional command 408 based on a condition for terminating the read optional command 408 from the read optional no data response condition field. The read optional terminal device 402 may terminate the read optional command 408 and prevent the read optional command 408 from being forwarded to the main memory.

The read optional terminal device 402 may generate and transmit the read optional no data response 410, having the read optional no data response field, to the read optional request device 400. In some embodiments, the read optional no data response 410 may be transmitted via an existing read data channel 406 of an existing bus protocol. In some embodiments, the read optional no data response 410 may include the read optional no data response terminal device ID field. In some embodiments, the read optional no data response 410 may include the read optional no data response condition field. The read optional request device 400 may receive the read optional no data response 410.

The example in FIG. 5 illustrates a write optional command 510 and write optional no data response 516 transaction. The write optional request device 500 may transmit the write optional command 510 to the write optional terminal device 502. In some embodiments, the write optional command 510 may be transmitted via an existing write address and/or command channel 504 of an existing bus protocol. In some embodiments, the write optional command 510 may include the write optional terminal device ID field. In some embodiments, the write optional command 510 may include the write optional no data response condition field. The write optional request device 500 may transmit write data 514 on a write data channel 506. The write optional terminal device 502 may receive the write optional command 510 and the write data 514.

The write optional terminal device 502 may determine that it is a write optional terminal device 502 for the write optional command 510. In some embodiments, the write optional terminal device 502 may be configured as a write optional terminal device 502 for the write optional command 510. In some embodiments, the write optional terminal device 502 may interpret that it is a write optional terminal device 502 for the write optional command 510 from the write optional terminal device ID field. The write optional terminal device 502 may determine that it may terminate the write optional command 510 based on a condition for terminating the write optional command 510. In some embodiments, the write optional terminal device 502 may be configured to determine that it may terminate the write optional command 510 based on a condition for terminating the write optional command 510. In some embodiments, the write optional terminal device 502 may interpret and determine that it may terminate the write optional command 510 based on a condition for terminating the write optional command 510 from the write optional no data response condition field. The write optional terminal device 502 may terminate the write optional command 510.

The write optional terminal device 502 may generate and transmit the write optional no data response 516, having the write optional no data response field, to the write optional request device 500. In some embodiments, the write optional no data response 516 may be transmitted via an existing write response channel 508 of an existing bus protocol. In some embodiments, the write optional no data response 516 may include the write optional no data response terminal device ID field. In some embodiments, the write optional no data response 516 may include the write optional no data response condition field. The write optional request device 500 may receive the write optional no data response 516.

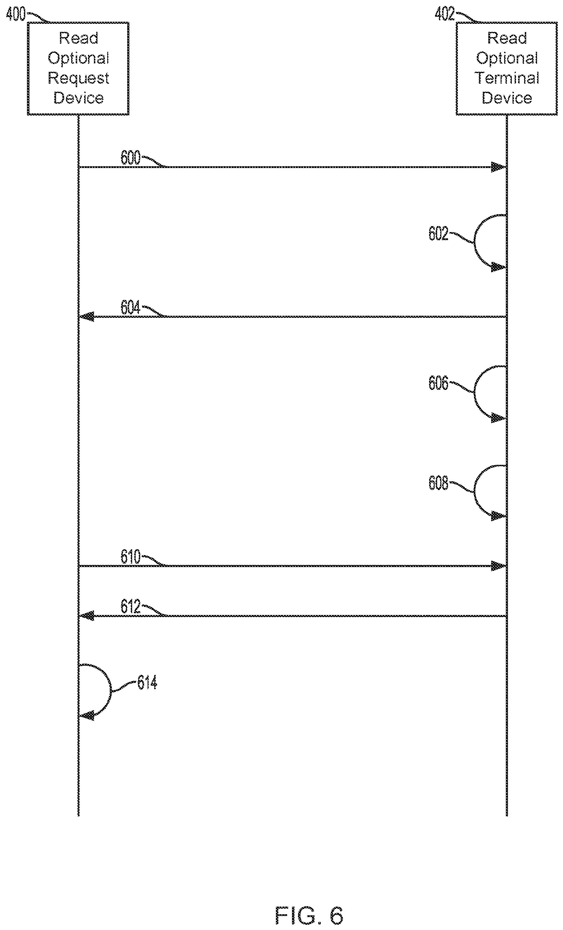

FIG. 6 illustrates an example of a read optional command used in avoiding livelock suitable for implementing various embodiments. With reference to FIGS. 1-6, the read optional request device 400 may transmit a read request 600 for data "X" from the read optional terminal device 402. The read optional terminal device 402 may receive the read request 600 for data "X". The read optional terminal device 402 may load data "X" and "Y" in operation 602 in response to the read request 600 for data "X". The read optional terminal device 402 may respond to the read request 600 by sending data "X" and a request to prompt a read request 604 of data "Y" to the read optional request device 400. The read optional request device 400 may receive the sent data "X" and the request to prompt a read command of data "Y" 604. The read optional terminal device 402 may evict data "X" in operation 606 and later evict data "Y" 608.

After the eviction of data "Y" in operation 608, the read optional request device 400 may send a read optional command 610 (e.g., read optional command 408 in FIG. 4) for data "Y". The read optional terminal device 402 may receive the read optional command 610 for data "Y" and respond by sending a read optional no data response 612 (read optional no data response 410 in FIG. 4). In some embodiments, the response to receiving the read optional command for data "Y" 610 by sending the read optional no data response 612 may differ from a response to a common read command for data "Y", in which the read optional terminal device 402 may forward the read command for data "Y" to a main memory, receive the data "X" and data "Y" from the main memory, and respond to the common read command for data "Y" by sending the data "Y" and a request to prompt a read command of data "X".

The read optional request device 400 may receive the read optional no data response 612 and abandon the requesting data "Y" in operation 614. In some embodiments, the abandonment of the request for data "Y" in operation 614 in response to receiving the read optional no data response 612 may differ from a response to receiving the data "Y" and a request to prompt a read command of data "X" in that the read optional request device 400 and the read optional terminal device 402 may repeat signals and operations 600-608, send a common read command for data "Y", forward the read command for data "Y" to a main memory, receive the data "X" and data "Y" from the main memory, and respond to the common read command for data "Y" by sending the data "Y" and a request to prompt a read command of data "X". This may cause a livelock loop where the requests for data are repeatedly sent after eviction of the data, causing data to be repeatedly retrieved from the main memory. However, sending the read optional command 610 for data "Y", sending the read optional no data response 612, and abandoning the request for data "Y" in operation 614 avoids repeated implementation of the signals and operations 600-608.

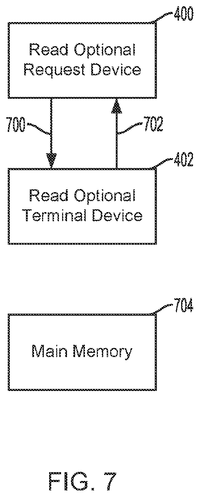

FIG. 7 illustrates an example of a read optional command suitable for implementing various embodiments. With reference to FIGS. 1-7, in this example, the read optional request device 400 may issue a read optional command (e.g., read optional command 408 in FIG. 4) 700 for data at an address of the read optional terminal device 402. As a non-limiting example, the read optional terminal device 402 may be a cache.

The read optional command 700 may miss in the read optional terminal device 402 when the requested data is not located at the address of the read optional terminal device 402 specified by the read optional command 700. In response to the miss for the data in the read optional terminal device 402, the read optional terminal device 402 may respond by sending a read optional no data response (read optional no data response 410 in FIG. 4) 702. The read optional request device 400 may receive the read optional no data response 702, and in response, may abandon or retry the read optional command 700. Unlike a traditional read command, the read optional terminal device 402 may not forward the read optional command 700 to the main memory 704 (e.g., memory 104 in FIG. 1, random access memory 228 in FIG. 2). As such, the read optional command 700 and the read optional no data response 702 may use fewer resources and have lower latency than forwarding a traditional read command to the main memory 704, retrieving the data from the main memory 704, writing the data to the read optional terminal device 402, and returning the data to the read optional request device 400.

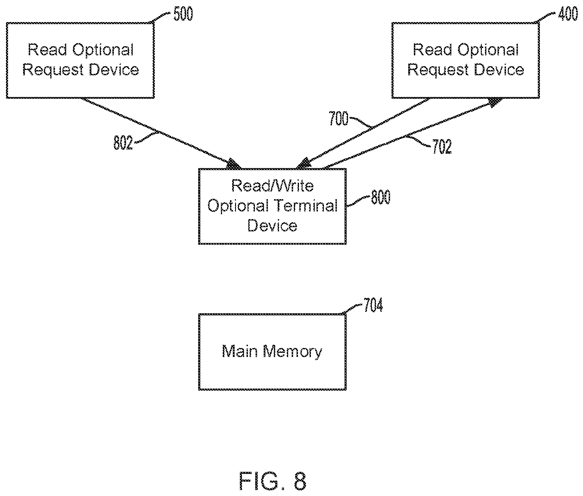

FIG. 8 illustrates an example of a read optional command for data streamlining suitable for implementing various embodiments. With reference to FIGS. 1-8, data streaming may be implemented between a producer and consumer pair of a producer write optional request device 500 and a consumer read optional request device 400. In some embodiments, the write optional request device 500 may issue a write optional command (e.g., write optional command 510 in FIG. 5) 802 to a read/write optional terminal device 800 (e.g., read optional terminal device 402 in FIG. 4, write optional terminal device in FIG. 5). As a non-limiting example, the read/write optional terminal device 800 may be a cache. In the example illustrated in FIG. 8, the write optional command 802 may be successful and may result in writing data to the read/write optional terminal device 800. However, in some embodiments, when no space is available to write the data to the read/write optional terminal device 800, the read/write optional terminal device 800 may return a write option no data response (e.g., write optional no data response 516 in FIG. 5). In some embodiments, the data of the write optional command 802 may be marked non-dirty or non-writeback.

The read optional request device 400 may issue a read optional command (e.g., read optional command 408 in FIG. 4) 700 for data at an address of the read/write optional terminal device 800. The read optional command 700 may miss in the read optional terminal device 402 when the requested data is not located at the address of the read optional terminal device 402 specified by the read optional command 700. For example, the read optional command 700 may be issued before the write optional command 802 for the same data. In response to the miss for the data in the read/write optional terminal device 800, the read/write optional terminal device 800 may respond by sending a read optional no data response (read optional no data response 410 in FIG. 4) 702. The read optional request device 400 may receive the read optional no data response 702, and in response, may abandon or retry the read optional command 700. In some embodiments, the data of the read optional command 700 may be marked non-dirty or non-writeback. In streaming data using re-used addresses in the read/write optional terminal device 800, reads may require that a read line be invalidated so that the read line may accept a next write. Invalidating the read line may be done as part of the read optional command 700 or automatically by the cache.

Unlike a traditional data streaming using traditional read and write commands, there may be no need for a data ready signal from the producer to the consumer a data synchronization mechanism to ensure the producer has written data a cache before a consumer attempts to read the data from the cache. Rather, a read optional no data response 702 may be used to inform the consumer read optional request device 400 that the data is not located in the read/write optional terminal device 800, and the read optional request device 400 may retry the read optional command 700 until it results in return of the requested data. Further, the read/write optional terminal device 800 may forgo writing back data to the main memory 704, which traditionally results from faster writes to than reads from a cache that overflow cache space, and from dirty data that has been read by the consumer that won't be addressed again. The write optional command 802 by the producer write optional request device 500 may be terminated by the read/write optional terminal device 800 based on a lack of space in the read/write optional terminal device 800. The data may not be written to the read/write optional terminal device 800 until the consumer read optional request device 400 has read and invalidated data in the read/write optional terminal device 800 creating space for the write optional request device 500 to write more data to the read/write optional terminal device 800.

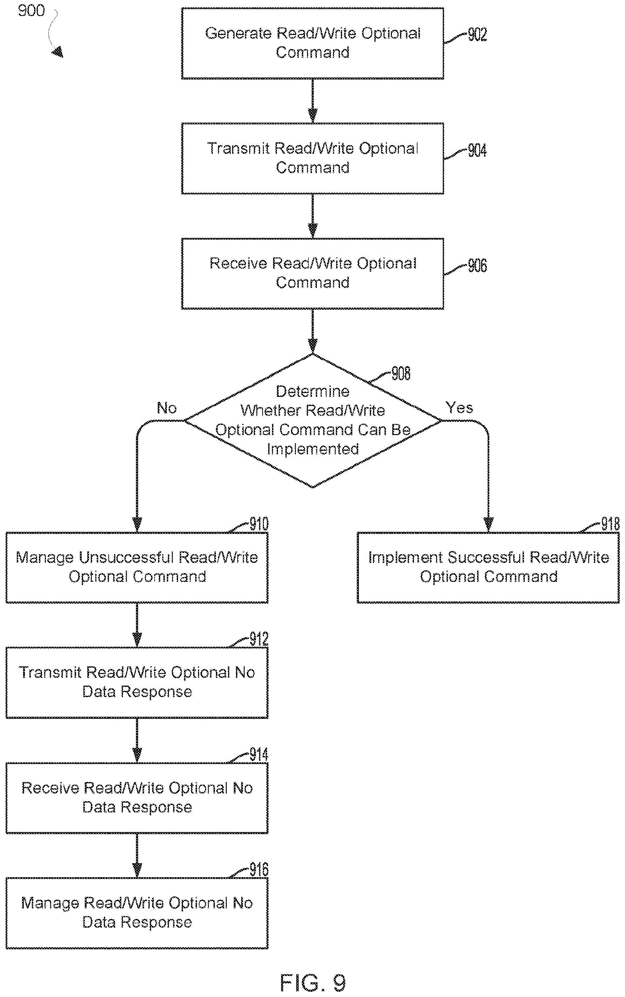

FIG. 9 illustrates a method 900 for read optional and/or write optional commands according to an embodiment. With reference to FIGS. 1-9, the method 900 may be implemented in a computing device (e.g., computing device 100 in FIG. 1), in hardware, in software executing in a processor, or in a combination of a software-configured processor and dedicated hardware (e.g., CPU 104, memory 106, communication interface 108, memory interface 110, peripheral device interface 120, processor 124 in FIG. 1, system hub 200, system cache 202, cache controller 204, protocol converter 208, processors 206, 210, 212, 214, memory interface 216, subsystems 218, 220, 222, 232, 234, NoC 224, memory controller 226 in FIG. 2, processor 300, processor cores 302, 304, 306, 308, processor core caches 310, 312, 314, 316, shared processor core caches 320, 322, processor shared cache 320, shared system cache 340 in FIG 3, read optional request device 400 in FIGS. 4 and 6-8, read optional terminal device 402 in FIGS. 4, 6, and 7, write optional request device 500 in FIGS 5 and 8, write optional terminal device 502 in FIG. 5, read/write optional terminal device 800 in FIG. 8). In order to encompass the alternative configurations enabled in various embodiments, the hardware implementing the method 900 is referred to herein as an "optional command device."

In block 902, the optional command device may generate a read optional command (e.g., read optional command 408 in FIG. 4) and/or write optional command

(e.g., write optional command 510 in FIG. 5). In some embodiments, an optional command request device may generate an optional command in block 902. In some embodiments a read optional request device may generate a read optional command in block 902. In some embodiments, a write optional request device may generate a write optional command in block 902.

As described herein, the read optional command may include an address field configured to indicate a target data and/or location for the read optional command. The read optional command may include a read optional command field configured to indicate the type of the command. In some embodiments, the read optional command may include a read optional terminal device ID field configured to indicate which one or more of read optional terminal devices may respond to the read optional command with a read optional no data response (e.g., read optional no data response 410 in FIG. 4). In some embodiments, the read optional command may include a read optional no data response condition field configured to indicate one or more conditions for which the read optional terminal devices may respond to the read optional command with the read optional no data response. In some embodiments the read optional terminal device ID and/or the read optional no data response condition may be inherent to the read optional command and may not need to be explicitly added as values in the read optional terminal device ID field and/or the read optional no data response condition field.

As described herein, the write optional command may include an address field configured to indicate a target data and/or location for the write optional command. The write optional command may include a write optional command field configured to indicate the type of the command. In some embodiments, the write optional command may include a write optional terminal device ID field configured to indicate which one or combination of write optional terminal devices may respond to the write optional command with a write optional no data response (e.g., write optional no data response 516 in FIG. 5). In some embodiments, the write optional command may include a write optional no data response condition field configured to indicate one or more conditions for which the write optional terminal devices may respond to the write optional command with the write optional no data response. In some embodiments the write optional terminal device ID and/or the write optional no data response condition may be inherent to the write optional command and may not need to be explicitly added as values in the write optional terminal device ID field and/or the write optional no data response condition field.

In block 904, the optional command device may transmit the read optional command and/or the write optional command. In some embodiments, the optional command request device may transmit the optional command in block 904. In some embodiments the read optional request device may transmit the read optional command in block 904. In some embodiments, the write optional request device may transmit the write optional command in block 904. The optional command device may transmit the read optional command to any device along a transaction path for the read optional command between the optional command device and a main memory (e.g., memory 104 in FIG. 1, random access memory 228 in FIG. 2, main memory 704 in FIGS. 7 and 8), such as a read optional terminal device. The optional command device may transmit the write optional command to any device along a transaction path for the write optional command between the optional command device and the main memory, such as a write optional terminal device.

In block 906, the optional command device may receive the read optional command and/or the write optional command. In some embodiments, an optional command terminal device may receive the optional command in block 906. In some embodiments the read optional terminal device may receive the read optional command in block 906. In some embodiments, the write optional terminal device may receive the write optional command in block 906.

In determination block 908, the optional command device may determine whether the read optional command and/or the write optional command may be implemented. In some embodiments, the optional command terminal device may determine whether the optional command may be implemented in determination block 908. In some embodiments the read optional terminal device may determine whether the read optional command may be implemented in determination block 908. In some embodiments, the write optional terminal device may determine whether the write optional command may be implemented in determination block 908. In some embodiments, the optional command device may determine whether the read optional command may be implemented based on whether target data of the read optional command is located by the optional command device. In some embodiments, the optional command device may determine whether the read optional command may be implemented based on a condition indicated in the read optional no data response condition field of the read optional command is met. In some embodiments, the optional command device may determine whether the read optional command may be implemented based on a condition inherent to the read optional command. For example, the condition indicated in the read optional no data response condition field and/or the condition inherent to the read optional command may include not locating requested data by the optional command device, requested data being out of bounds for a buffer, a cost of implementing the read optional command exceeding a cost threshold, implementation of the read optional command resulting in an exception, error, and/or fault, being denied access to a requested location and/or target data, etc.

In some embodiments, the optional command device may check the address field of the read optional command configured to indicate target data and/or a location for the read optional command. The optional command device may determine whether the target data is at the location. In response to determining that the target data is not at the location, the optional command device may determine that the read optional command may not be implemented. In some embodiments, the optional command device may determine not to implement the read optional command based on the condition of the read optional no data response condition field being that the target data is not at the location.

In some embodiments, the optional command device may check the address field of the read optional command configured to indicate a target data and/or location for the read optional command. The optional command device may determine whether the location of the target data is within boundaries of a buffer. In response to determining that the location of the target data is not within the boundaries of the buffer, the optional command device may determine that the read optional command may not be implemented. In some embodiments, the optional command device may determine not to implement the read optional command based on the condition of the read optional no data response condition field being that the location of the target data is not within the boundaries of the buffer.

In some embodiments, the optional command device may calculate a cost for implementing the read optional command. The cost may be calculated based on a cost of any number and combination of operations for implementing the read optional command. Such operations may include read operations, fetch operations, memory management operations, memory coherency operations, etc. Cost may be measured, for example, on a basis of any number and combination of power, time, cycles, bandwidth, resource requirement, effect on latency for other operations, etc. The optional command device may compare the calculated cost for implementing the read optional command to a cost threshold. The optional command device may determine whether the cost for implementing the read optional command exceeds the cost threshold. In response to determining that the cost for implementing the read optional command exceeds the cost threshold, the optional command device may determine that the read optional command may not be implemented. In some embodiments, the optional command device may determine not to implement the read optional command based on the condition of the read optional no data response condition field being that the cost for implementing the read optional command exceeds the cost threshold. In some embodiments, the condition of the read optional no data response condition field may include a value indicating a value of the cost threshold.

In some embodiments, the optional command device may determine that implementing the read optional command may result in an exception, error, and/or fault. In response to determining that implementing the read optional command may result in an exception, error, and/or fault, the optional command device determine that the read optional command may not be implemented. Not implementing the read optional command may avoid an exception, error, and/or fault resulting from implementing the read optional command. In some embodiments, the optional command device may determine not to implement the read optional command based on the condition of the read optional no data response condition field being that implementing the read optional command may result in an exception, error, and/or fault.

In some embodiments, the optional command device may determine that implementing the read optional command may violate a security protocol. For example, the optional command device may determine that implementing the read optional command may violate a security protocol based on denial of access to a target data and/or location. In response to determining that implementing the read optional command may violate a security protocol, the optional command device determine that the read optional command may not be implemented. In some embodiments, the optional command device may determine not to implement the read optional command based on the condition of the read optional no data response condition field being being denied access the requested target data and/or location.

In some embodiments, the optional command device may determine whether the write optional command may be implemented based on whether there is space to write the target data of the write optional command in the optional command device. In some embodiments, the optional command device may determine whether the write optional command may be implemented based on a condition indicated in the write optional no data response condition field of the write optional command is met. In some embodiments, the optional command device may determine whether the write optional command may be implemented based on a condition inherent to the write optional command. For example, the condition indicated in the write optional no data response condition field and/or the condition inherent to the write optional command may include a requested data write location not being available for writing by the optional command device, a requested data write location being out of bounds for a buffer, a cost of implementing the write optional command exceeding a cost threshold, implementation of the write optional command resulting in an exception, error, and/or fault, being denied access to a requested location, etc.

In some embodiments, the optional command device may check the address field of the write optional command configured to indicate a target location for the write optional command. The optional command device may determine whether the target location is available to be written. In response to determining that the target location is not available to be written, the optional command device may determine that the write optional command may not be implemented. In some embodiments, the optional command device may determine not to implement the write optional command based on the condition of the write optional no data response condition field being that the target location is not available to be written.

In some embodiments, the optional command device may check the address field of the write optional command configured to indicate a target location for the write optional command. The optional command device may determine whether the target location is within boundaries of a buffer. In response to determining that the target location is not within the boundaries of the buffer, the optional command device may determine that the write optional command may not be implemented. In some embodiments, the optional command device may determine not to implement the write optional command based on the condition of the write optional no data response condition field being that the target location is not within the boundaries of the buffer.

In some embodiments, the optional command device may calculate a cost for implementing the write optional command. The cost may be calculated based on a cost of any number and combination of operations for implementing the write optional command. Such operations may include write operations, memory management operations, memory coherency operations, etc. Cost may be measured, for example, on a basis of any number and combination of power, time, cycles, bandwidth, resource requirement, effect on latency for other operations, etc. The optional command device may compare the calculated cost for implementing the write optional command to a cost threshold. The optional command device may determine whether the cost for implementing the write optional command exceeds the cost threshold. In response to determining that the cost for implementing the write optional command exceeds the cost threshold, the optional command device may determine that the write optional command may not be implemented. In some embodiments, the optional command device may determine not to implement the write optional command based on the condition of the write optional no data response condition field being that the cost for implementing the write optional command exceeds the cost threshold. In some embodiments, the condition of the write optional no data response condition field may include a value indicating a value of the cost threshold.

In some embodiments, the optional command device may determine that implementing the write optional command may result in an exception, error, and/or fault. In response to determining that implementing the write optional command may result in an exception, error, and/or fault, the optional command device may determine that the write optional command may not be implemented. Not implementing the write optional command may avoid an exception, error, and/or fault resulting from implementing the write optional command. In some embodiments, the optional command device may determine not to implement the write optional command based on the condition of the write optional no data response condition field being that implementing the write optional command may result in an exception, error, and/or fault.

In some embodiments, the optional command device may determine that implementing the write optional command may violate a security protocol. For example, the optional command device may determine that implementing the write optional command may violate a security protocol based on denial of access to a target location. In response to determining that implementing the write optional command may violate a security protocol, the optional command device may determine that the write optional command may not be implemented. In some embodiments, the optional command device may determine not to implement the write optional command based on the condition of the write optional no data response condition field being being denied access the requested target data and/or location.

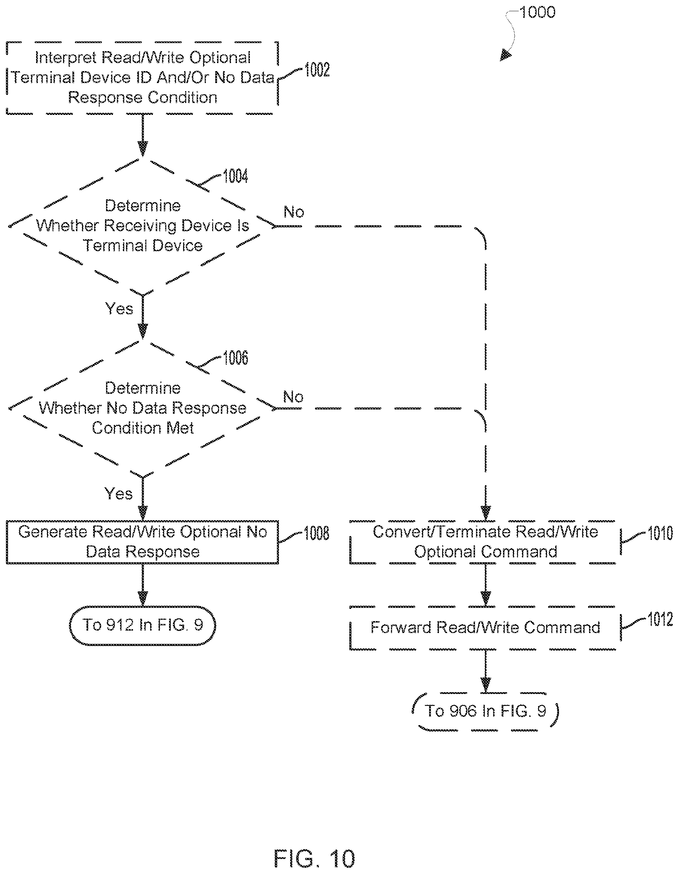

In response to determining that the read optional command and/or the write optional command may not be implemented (i.e., determination block 908 = "No"), the optional command device may manage the unsuccessful read optional command and/or the unsuccessful write optional command in block 910. In some embodiments, the optional command terminal device may manage the unsuccessful optional command in block 910. In some embodiments the read optional terminal device may manage the unsuccessful read optional command in block 910. In some embodiments, the write optional terminal device may manage the unsuccessful write optional command in block 910. Managing the unsuccessful read optional command and/or the unsuccessful write optional command is described further herein with reference to the method 1000 of FIG. 10.

In block 912, the optional command device may transmit a read optional no data response (e.g., read optional no data response 410 in FIG. 4) and/or a write optional no data response (e.g., write optional no data response 516 in FIG. 5). In some embodiments, the optional command terminal device may transmit the optional no data response in block 912. In some embodiments the read optional terminal device may transmit the read optional no data response in block 912. In some embodiments, the write optional terminal device may transmit the write optional no data response in block 912. The optional command device may transmit the read optional no data response to the optional command device, such as the read optional request device. The optional command device may transmit the write optional no data response to the optional command device, such as the write optional request device.

In block 914, the optional command device may receive the read optional no data response and/or the write optional no data response. In some embodiments, the optional command request device may receive the read optional no data response in block 914. In some embodiments the read optional request device may receive the read optional no data response in block 914. In some embodiments, the write optional request device may receive the write optional no data response in block 914.

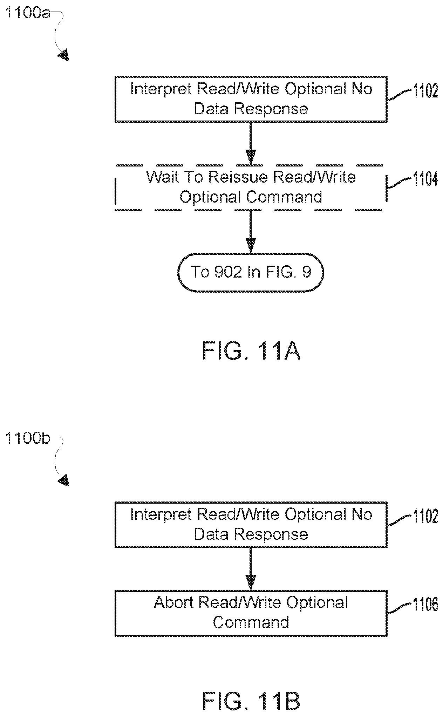

In block 916, the optional command device may manage the read optional no data response and/or the write optional no data response. In some embodiments, the optional command request device may manage the read optional no data response in block 916. In some embodiments the read optional request device may manage the read optional no data response in block 916. In some embodiments, the write optional request device may manage the write optional no data response in block 916. Managing the read optional no data response and/or the write optional no data response is described further herein with reference to the method 1100a of FIG. 11A and the method 1100b of FIG. 11B.

In response to determining that the read optional command and/or the write optional command may be implemented (i.e., determination block 908 = "Yes"), the optional command device may implement the successful read optional command and/or the successful write optional command in block 918. In some embodiments, the optional command terminal device may implement the successful optional command in block 918. In some embodiments the read optional terminal device may implement the successful read optional command in block 918. In some embodiments, the write optional terminal device may implement the successful write optional command in block 918. In some embodiments, implementing the successful read optional command may include returning the target data of the read optional command to the optional command device. In some embodiments, implementing the successful write optional command may include writing the target data of the write optional command to the optional command device or other device to which the optional command device may pass the write optional command.

FIG. 10 illustrates a method 1000 for managing unsuccessful read optional and/or write optional commands according to an embodiment. With reference to FIGS. 1-10, the method 1000 may be implemented in a computing device (e.g., computing device 100 in FIG. 1), in hardware, in software executing in a processor, or in a combination of a software-configured processor and dedicated hardware (e.g., CPU 104, memory 106, communication interface 108, memory interface 110, peripheral device interface 120, processor 124 in FIG. 1, system hub 200, system cache 202, cache controller 204, protocol converter 208, processors 206, 210, 212, 214, memory interface 216, subsystems 218, 220, 222, 232, 234, NoC 224, memory controller 226 in FIG. 2, processor 300, processor cores 302, 304, 306, 308, processor core caches 310, 312, 314, 316, shared processor core caches 320, 322, processor shared cache 320, shared system cache 340 in FIG 3, read optional request device 400 in FIGS. 4 and 6-8, read optional terminal device 402 in FIGS. 4, 6, and 7, write optional request device 500 in FIGS 5 and 8, write optional terminal device 502 in FIG. 5, read/write optional terminal device 800 in FIG. 8). In order to encompass the alternative configurations enabled in various embodiments, the hardware implementing the method 1000 is referred to herein as an "optional command device." In some embodiments, the method 1000 may be implemented as part of block 910 in the method of FIG. 9. In the example illustrated in FIG. 10, blocks and lines shown using broken lines are portions of the method 1000 that may be optionally included in any combination.

In optional block 1002, the optional command device may interpret a read optional terminal device ID, a read optional no data response condition, a write optional terminal device ID, and/or a write optional no data response condition of a read optional command (e.g., read optional command 408 in FIG. 4) and/or a write optional command (e.g., write optional command 510 in FIG. 5). In some embodiments, an optional command terminal device may interpret the optional terminal device ID and/or the optional no data response condition of the read optional command in block 1002. In some embodiments a read optional terminal device may interpret the read optional terminal device ID and/or the read optional no data response condition of the read optional command in block 1002. In some embodiments, a write optional terminal device may interpret the write optional terminal device ID and/or the write optional no data response condition of the write optional command in block 1002. As described herein, in some embodiments, the read optional command may include a read optional terminal device ID field configured to indicate which one or more of read optional terminal devices may respond to the read optional command with a read optional no data response (e.g., read optional no data response 410 in FIG. 4). In some embodiments, the read optional command may include a read optional no data response condition field configured to indicate one or more conditions for which the read optional terminal devices may respond to the read optional command with the read optional no data response. In some embodiments the read optional terminal device ID and/or the read optional no data response condition may be inherent to the read optional command and may not need to be explicitly added as values in the read optional terminal device ID field and/or the read optional no data response condition field. For example, the condition indicated in the read optional no data response condition field and/or the condition inherent to the read optional command may include not locating requested data by the optional command device, requested data being out of bounds for a buffer, a cost of implementing the read optional command exceeding a cost threshold, implementation of the read optional command resulting in an exception, error, and/or fault, being denied access to a requested location and/or target data, etc.

As described herein, in some embodiments, the write optional command may include a write optional terminal device ID field configured to indicate which one or combination of write optional terminal devices may respond to the write optional command with a write optional no data response (e.g., write optional no data response 516 in FIG. 5). In some embodiments, the write optional command may include a write optional no data response condition field configured to indicate one or more conditions for which the write optional terminal devices may respond to the write optional command with the write optional no data response. In some embodiments the write optional terminal device ID and/or the write optional no data response condition may be inherent to the write optional command and may not need to be explicitly added as values in the write optional terminal device ID field and/or the write optional no data response condition field. For example, the condition indicated in the write optional no data response condition field and/or the condition inherent to the write optional command may include a requested data write location not being available for writing by the optional command device, a requested data write location being out of bounds for a buffer, a cost of implementing the write optional command exceeding a cost threshold, implementation of the write optional command resulting in an exception, error, and/or fault, being denied access to a requested location, etc.

In optional determination block 1004, the optional command device may determine whether the optional command device is a read optional command terminal device and/or a write optional command terminal device. In some embodiments, the optional command terminal device may determine whether it is an optional terminal device in optional determination block 1004. In some embodiments, the read optional terminal device may determine whether it is a read optional terminal device in optional determination block 1004. In some embodiments, the write optional terminal device may determine whether it is a write optional terminal device in optional determination block 1004. In some embodiments the optional command device may determine whether it is a read optional command terminal device and/or a write optional command terminal device based on the interpretation of the read optional terminal device ID and/or the write optional terminal device ID in block 1002. In some embodiments optional determination block 1004 may be implemented in response to determining that the read optional command and/or the write optional command may not be implemented (i.e., determination block 908 = "No" in the method of FIG. 9). In some embodiments optional determination block 1004 may be implemented following interpreting a read optional terminal device ID, a read optional no data response condition, a write optional terminal device ID, and/or a write optional no data response condition of a read optional command and/or a write optional command in optional block 1002. In some embodiments optional determination block 1004 may be implemented in response to determining that a read optional no data response condition and/or a write optional no data response condition is met (e.g., optional determination block 1006 = "Yes") as described below.

In optional determination block 1006, the optional command device may determine whether a read optional no data response condition and/or a write optional no data response condition is met. In some embodiments, the optional command terminal device may determine whether an optional no data response condition is met in optional determination block 1006. In some embodiments, the read optional terminal device may determine whether a read optional no data response condition is met in optional determination block 1006. In some embodiments, the write optional terminal device may determine whether a write optional terminal no data response condition is met in optional determination block 1006. In some embodiments the optional command device may determine whether a read optional no data response condition and/or a write optional no data response condition is met based on the interpretation of the read optional no data response condition and/or the write optional no data response condition in block 1002. In some embodiments optional determination block 1006 may be implemented in response to determining that the read optional command and/or the write optional command may not be implemented (i.e., determination block 908 = "No" in the method of FIG. 9). In some embodiments optional determination block 1006 may be implemented following interpreting a read optional terminal device ID, a read optional no data response condition, a write optional terminal device ID, and/or a write optional no data response condition of a read optional command and/or a write optional command in optional block 1002. In some embodiments, optional determination block 1004 may be implemented in response to determining that the optional command device is a read optional command terminal device and/or a write optional command terminal device (i.e., optional determination block 1004 = "Yes").

In some embodiments, the optional command device may check an address field of the read optional command configured to indicate a target data and/or location for the read optional command. The optional command device may determine whether the target data is at the indicated location. In response to determining that the target data is not at the indicated location, the optional command device may determine that the read optional no data response condition is met. In some embodiments, the optional command device may determine that the read optional no data response condition is met based on the condition of the read optional no data response condition field being that the target data is not at the location.

In some embodiments, the optional command device may check the address field of the read optional command configured to indicate a target data and/or location for the read optional command. The optional command device may determine whether the indicated location of the target data is within boundaries of a buffer. In response to determining that the indicated location of the target data is not within the boundaries of the buffer, the optional command device may determine that the read optional no data response condition is met. In some embodiments, the optional command device may determine that the read optional no data response condition is met based on the condition of the read optional no data response condition field being that the indicated location of the target data is not within the boundaries of the buffer.

In some embodiments, the optional command device may calculate a cost for implementing the read optional command. The cost may be calculated based on a cost of any number and combination of operations for implementing the read optional command. Such operations may include read operations, fetch operations, memory management operations, memory coherency operations, etc. Cost may be measured, for example, on a basis of any number and combination of power, time, cycles, bandwidth, resource requirement, effect on latency for other operations, etc. The optional command device may compare the calculated cost for implementing the read optional command to a cost threshold. The optional command device may determine whether the cost for implementing the read optional command exceeds the cost threshold. In response to determining that the cost for implementing the read optional command exceeds the cost threshold, the optional command device may determine that the read optional no data response condition is met. In some embodiments, the optional command device may determine that the read optional no data response condition is met based on the condition of the read optional no data response condition field being that the cost for implementing the read optional command exceeds the cost threshold. In some embodiments, the condition of the read optional no data response condition field may include a value indicating a value of the cost threshold.

In some embodiments, the optional command device may determine that implementing the read optional command may result in an exception, error, and/or fault. In response to determining that implementing the read optional command may result in an exception, error, and/or fault, the optional command device may determine that the read optional no data response condition is met. In some embodiments, the optional command device may determine that the read optional no data response condition is met based on the condition of the read optional no data response condition field being that implementing the read optional command may result in an exception, error, and/or fault.

In some embodiments, the optional command device may determine that implementing the read optional command may violate a security protocol. For example, the optional command device may determine that implementing the read optional command may violate a security protocol based on denial of access to target data and/or a location in memory. In response to determining that implementing the read optional command may violate a security protocol, the optional command device may determine that the read optional no data response condition is met. In some embodiments, the optional command device may determine that the read optional no data response condition is met based on the condition of the read optional no data response condition field being being denied access the requested target data and/or location.

In some embodiments, the optional command device may check an address field of the write optional command configured to indicate a target location for the write optional command. The optional command device may determine whether the target location is available to be written. In response to determining that the target location is not available to be written, the optional command device may determine that the write optional no data response condition is met. In some embodiments, the optional command device may determine that the write optional no data response condition is met based on the condition of the write optional no data response condition field being that the target location is not available to be written.

In some embodiments, the optional command device may check the address field of the write optional command configured to indicate a target location for the write optional command. The optional command device may determine whether the target location is within boundaries of a buffer. In response to determining that the target location is not within the boundaries of the buffer, the optional command device may determine that the write optional no data response condition is met. In some embodiments, the optional command device may determine that the write optional no data response condition is met based on the condition of the write optional no data response condition field being that the target location is not within the boundaries of the buffer.

In some embodiments, the optional command device may calculate a cost for implementing the write optional command. The cost may be calculated based on a cost of any number and combination of operations for implementing the write optional command. Such operations may include write operations, memory management operations, memory coherency operations, etc. Cost may be measured, for example, on a basis of any number and combination of power, time, cycles, bandwidth, resource requirement, effect on latency for other operations, etc. The optional command device may compare the calculated cost for implementing the write optional command to a cost threshold. The optional command device may determine whether the cost for implementing the write optional command exceeds the cost threshold. In response to determining that the cost for implementing the write optional command exceeds the cost threshold, the optional command device may determine that the write optional no data response condition is met. In some embodiments, the optional command device may determine that the write optional no data response condition is met based on the condition of the write optional no data response condition field being that the cost for implementing the write optional command exceeds the cost threshold. In some embodiments, the condition of the write optional no data response condition field may include a value indicating a value of the cost threshold.

In some embodiments, the optional command device may determine that implementing the write optional command may result in an exception, error, and/or fault. In response to determining that implementing the write optional command may result in an exception, error, and/or fault, the optional command device may determine that the write optional no data response condition is met. In some embodiments, the optional command device may determine that the write optional no data response condition is met based on the condition of the write optional no data response condition field being that implementing the write optional command may result in an exception, error, and/or fault.

In some embodiments, the optional command device may determine that implementing the write optional command may violate a security protocol. For example, the optional command device may determine that implementing the write optional command may violate a security protocol based on denial of access to a target location. In response to determining that implementing the write optional command may violate a security protocol, the optional command device may determine that the write optional no data response condition is met. In some embodiments, the optional command device may determine that the write optional no data response condition is met based on the condition of the write optional no data response condition field being being denied access the requested target data and/or location.

In block 1008, the optional command device may generate a read optional no data response (e.g., read optional no data response 410 in FIG. 4) and/or a write optional no data response (write optional no data response 516 in FIG. 5). In some embodiments, the optional command terminal device may generate an optional no data response in block 1008. In some embodiments the read optional terminal device may generate a read optional no data response in block 1008. In some embodiments the write optional terminal device may generate a write optional no data response in block 1008. As described herein, the read optional no data response may include a read optional no data response field configured to indicate the type of the response. In some embodiments, the read optional no data response may include a read optional no data response terminal device ID field configured to indicate which read optional terminal device responds to the read optional command with the read optional no data response. In some embodiments, the read optional no data response may include a read optional no data response condition field configured to indicate a condition for which the read optional terminal device responds to the read optional command with the read optional no data response. In some embodiments, the operations in block 1008 may be implemented in response to determining that the read optional command and/or the write optional command may not be implemented (i.e., determination block 908 = "No" in the method 900 described with reference to FIG. 9). In some embodiments, the operations in block 1008 may be implemented in response to determining that the optional command device is a read optional command terminal device and/or a write optional command terminal device (i.e., optional determination block 1004 = "Yes"), or in response to determining that a read optional no data response condition and/or a write optional no data response condition is met (e.g., optional determination block 1006 = "Yes").

As described herein, the write optional no data response may include a write optional no data response field configured to indicate the type of the response. In some embodiments, the write optional no data response may include a write optional no data response terminal device ID field configured to indicate which write optional terminal device responds to the write optional command with the write optional no data response. In some embodiments, the write optional no data response may include a write optional no data response condition field configured to indicate a condition for which the write optional terminal device responds to the write optional command with the write optional no data response. The optional command device may transmit the read optional no data response and/or the write optional no data response in block 912 of the method 900 in FIG. 9. In some embodiments, as part of generating a read optional no data response and/or a write optional no data response in block 1008 and/or transmitting the read optional no data response and/or the write optional no data response in block 912, the optional command device may terminate the read optional command and/or write optional command. By terminating the read optional command and/or write optional command, the optional command device may prevent the optional command from being forwarded to a device along a transaction path.

In response to determining that the optional command device is not a read optional command terminal device and/or a write optional command terminal device (i.e., optional determination block 1004 = "No"), or in response to determining that a read optional no data response condition and/or a write optional no data response condition is not met (e.g., optional determination block 1006 = "No"), the optional command device may convert the read optional command and/or the write optional command to a read command and/or a write command in optional block 1010. In some embodiments the read command and/or a write command may be a conventional read command and/or a conventional write command. To convert the read optional command and/or the write optional command, the optional command device may use information from the read optional command and/or the write optional command corresponding to data needed for the read command and/or the write command to generate the read command and/or the write command. The optional block 1010 may be implemented by the optional terminal device, for example, for devices further along the transaction path for which the read optional command and/or the write optional command may not apply, may not be supported, etc. In some embodiments, as part of converting the read optional command and/or the write optional command to a read command and/or a write command in optional block 1010, the optional command device may terminate the read optional command and/or write optional command. By terminating the read optional command and/or write optional command, the optional command device may prevent the optional command from being forwarded to a device along a transaction path. In some embodiments, the optional command terminal device may convert the optional command to a command in optional block 1010. In some embodiments the read optional terminal device may convert the read optional command to a read command in optional block 1010. In some embodiments, the write optional terminal device may convert the write optional command to a write command in optional in block 1010.

In optional block 1012, the optional command device may forward a read command and/or a write command along the transaction path of the read optional command and/or the write optional command in block 1010. In some embodiments the read command and/or the write command may be the read optional command and/or the write optional command. In some embodiments, the read command and/or the write command may be the conventional read command and/or the conventional write command to which the read optional command and/or the write optional command was converted in optional block 1010. In some embodiments, the optional command terminal device may forward the command along the transaction path of the optional command in block 1012. In some embodiments the read optional terminal device may forward the read command along the transaction path of the read optional command in block 1012. In some embodiments the write optional terminal device may forward the write command along the transaction path of the write optional command in block 1012. In some embodiments, optional block 1012 may be implemented in response to determining that the optional command device is not a read optional command terminal device and/or a write optional command terminal device (i.e., optional determination block 1004 = "No"). In some embodiments, optional block 1012 may be implemented in response to determining that a read optional no data response condition and/or a write optional no data response condition is not met (e.g., optional determination block 1006 = "No"). In some embodiments, optional block 1012 may be implemented after converting the read optional command and/or the write optional command to a read command and/or a write command in optional block 1010. In some embodiments, the optional command device may optionally receive the read optional command and/or the write optional command in block 906 of the method 900 of FIG. 9. In some embodiments, a device further along the transaction path may receive the conventional read command and/or the conventional write command and respond to receiving the conventional read command and/or the conventional write command in a known manner.

FIGS. 11A and 11B illustrate methods 1100a, 1100b for managing read optional and/or write optional no data responses according to an embodiment. With reference to FIGS. 1-11B, the methods 1100a, 1100b may be implemented in a computing device (e.g., computing device 100 in FIG. 1), in hardware, in software executing in a processor, or in a combination of a software-configured processor and dedicated hardware (e.g., CPU 104, memory 106, communication interface 108, memory interface 110, peripheral device interface 120, processor 124 in FIG. 1, system hub 200, system cache 202, cache controller 204, protocol converter 208, processors 206, 210, 212, 214, memory interface 216, subsystems 218, 220, 222, 232, 234, NoC 224, memory controller 226 in FIG. 2, processor 300, processor cores 302, 304, 306, 308, processor core caches 310, 312, 314, 316, shared processor core caches 320, 322, processor shared cache 320, shared system cache 340 in FIG 3, read optional request device 400 in FIGS. 4 and 6-8, read optional terminal device 402 in FIGS. 4, 6, and 7, write optional request device 500 in FIGS 5 and 8, write optional terminal device 502 in FIG. 5, read/write optional terminal device 800 in FIG. 8). In order to encompass the alternative configurations enabled in various embodiments, the hardware implementing the methods 1100a, 1100b is referred to herein as an "optional command device." In some embodiments, the methods 1100a, 1100b may be implemented as part of block 916 in the method of FIG. 9. In the example illustrated in FIG. 11A, blocks and lines shown using broken lines are portions of the method 1100a that may be optionally included in any combination.

With reference to the method 1100a, in block 1102, the optional command device may interpret a read optional no data response (e.g., read optional no data response 410 in FIG. 4) and/or a write optional no data response (e.g., write optional no data response 516 in FIG. 5). In some embodiments, an optional command request device may interpret the optional no data response in block 1102. In some embodiments, a read optional request device may interpret the read optional no data response in block 1102. In some embodiments, a write optional request device may interpret the write optional no data response in block 1102. As described herein, the read optional no data response may be an acceptable state, such as "OK" state, for the optional command device, rather than an error or fault state triggered by an error or fault signal for failure of a memory access request. Not implementing a read optional command (e.g., read optional command 408 in FIG. 4) may be an acceptable state in that the implementation of the read optional command may not be required, even, for example, when the implementing the read optional command may be critical. As such, not implementing the read optional command may not be error or fault state triggered by an error or fault signal that may be configured to indicate no, incomplete, improper, etc. implementation of a required memory access. The optional command device may be configured to retry and/or abandon the read optional command in response. In some embodiments, the optional command device may be preconfigured with how to respond to the read optional command no data response. In some embodiments, the optional command request device may determine how to respond to the optional command no data response. The read optional no data response may include a read optional no data response field configured to indicate the type of the response. In some embodiments, the read optional no data response may include a read optional no data response terminal device ID field configured to indicate which read optional terminal device responds to the read optional command with the read optional no data response. In some embodiments, the read optional no data response may include a read optional no data response condition field configured to indicate a condition for which the read optional terminal device responds to the read optional command with the read optional no data response.

As described herein, the write optional no data response may be an acceptable state, such as "OK" state, for the optional command device, rather than an error or fault state triggered by an error or fault signal for failure of a memory access request. Not implementing a write optional command (e.g., write optional command 510 in FIG. 5) may be an acceptable state in that the implementation of the write optional command may not be required, even, for example, when the implementing the write optional command may be critical. As such, not implementing the write optional command may not be error or fault state triggered by an error or fault signal that may be configured to indicate no, incomplete, improper, etc. implementation of a required memory access. The optional command device may be configured to retry and/or abandon the write optional command in response. In some embodiments, the optional command device may be preconfigured with how to respond to the write optional command no data response. In some embodiments, the optional command request device may determine how to respond to the write optional command no data response. The write optional no data response may include a write optional no data response field configured to indicate the type of the response. In some embodiments, the write optional no data response may include a write optional no data response terminal device ID field configured to indicate which write optional terminal device responds to the write optional command with the write optional no data response. In some embodiments, the write optional no data response may include a write optional no data response condition field configured to indicate a condition for which the write optional terminal device responds to the write optional command with the write optional no data response.

In optional block 1104, the optional command device may wait to reissue a read optional command (e.g., read optional command 408 in FIG. 4) and/or a write optional command (e.g., write optional command 510 in FIG. 5). In some embodiments, the optional command request device may wait to reissue the optional command in block 1104. In some embodiments, the read optional request device may wait to reissue the read optional command in block 1104. In some embodiments, the write optional request device may wait to reissue the write optional command in block 1104. In some embodiments, the units and amount of units to wait may be predetermined. In some embodiments, the units and amount of units to wait may be determined from the interpretation of the read optional no data response and/or the write optional no data response in block 1102. The optional command device may generate the read optional command and/or the write optional command in block 902 of the method 900 in FIG. 9.

With reference to the method 1100b, in block 1102, the optional command device may interpret a read optional no data response (e.g., read optional no data response 410 in FIG. 4) and/or a write optional no data response (e.g., write optional no data response 516 in FIG. 5), as described herein with reference to block 1102 of the method 1100a in FIG. 11A. In block 1106, the optional command device may abandon the read optional command (e.g., read optional command 408 in FIG. 4) and/or the write optional command (e.g., write optional command 510 in FIG. 5). In some embodiments, the optional command request device may abandon the optional command in block 1106. In some embodiments, the read optional request device may abandon the read optional command in block 1106. In some embodiments, the write optional command device may abandon the write optional command in block 1106. In some embodiments, the optional command device may abandon the read optional command and/or the write optional command through inaction, such as by not reissuing the read optional command and/or the write optional command. In some embodiments, the optional command device may abandon the read optional command and/or the write optional command through affirmative action, such as by removing the read optional command and/or the write optional command from a schedule and/or queue. In some embodiments, for a read optional command and/or the write optional command generated on behalf of an instruction, that instruction may record the read optional no data response and/or a write optional no data according to the ISA, which may include writing a value to a register, status bit, or other signaling mechanism.

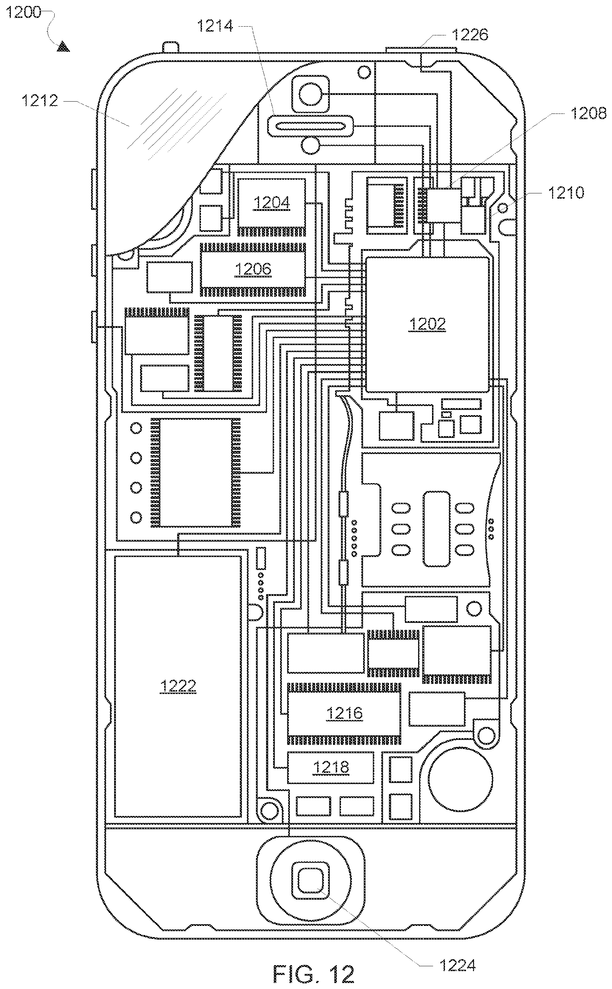

A read optional command and/or write optional command system in accordance with the various embodiments (including, but not limited to, embodiments described above with reference to FIGs. 1-11B) may be implemented in a wide variety of computing systems including mobile computing devices, an example of which suitable for use with the various embodiments is illustrated in FIG. 12. The mobile computing device 1200 may include a processor 1202 coupled to a touchscreen controller 1204 and an internal memory 1206. The processor 1202 may be one or more multicore integrated circuits designated for general or specific processing tasks. The internal memory 1206 may be volatile or non-volatile memory, and may also be secure and/or encrypted memory, or unsecure and/or unencrypted memory, or any combination thereof. Examples of memory types that can be leveraged include but are not limited to DDR, LPDDR, GDDR, WIDEIO, RAM, SRAM, DRAM, P-RAM, R-RAM, M-RAM, STT-RAM, and embedded DRAM. The touchscreen controller 1204 and the processor 1202 may also be coupled to a touchscreen panel 1212, such as a resistive-sensing touchscreen, capacitive-sensing touchscreen, infrared sensing touchscreen, etc. Additionally, the display of the mobile computing device 1200 need not have touch screen capability.

The mobile computing device 1200 may have one or more radio signal transceivers 1208 (e.g., Peanut, Bluetooth, ZigBee, Wi-Fi, RF radio) and antennae 1210, for sending and receiving communications, coupled to each other and/or to the processor 1202. The transceivers 1208 and antennae 1210 may be used with the above-mentioned circuitry to implement the various wireless transmission protocol stacks and interfaces. The mobile computing device 1200 may include a cellular network wireless modem chip 1216 that enables communication via a cellular network and is coupled to the processor.

The mobile computing device 1200 may include a peripheral device connection interface 1218 coupled to the processor 1202. The peripheral device connection interface 1218 may be singularly configured to accept one type of connection, or may be configured to accept various types of physical and communication connections, common or proprietary, such as Universal Serial Bus (USB), FireWire, Thunderbolt, or PCIe. The peripheral device connection interface 1218 may also be coupled to a similarly configured peripheral device connection port (not shown).

The mobile computing device 1200 may also include speakers 1214 for providing audio outputs. The mobile computing device 1200 may also include a housing 1224, constructed of a plastic, metal, or a combination of materials, for containing all or some of the components described herein. The mobile computing device 1200 may include a power source 1222 coupled to the processor 1202, such as a disposable or rechargeable battery. The rechargeable battery may also be coupled to the peripheral device connection port to receive a charging current from a source external to the mobile computing device 1200. The mobile computing device 1200 may also include a physical button 1224 for receiving user inputs. The mobile computing device 1200 may also include a power button 1226 for turning the mobile computing device 1200 on and off.

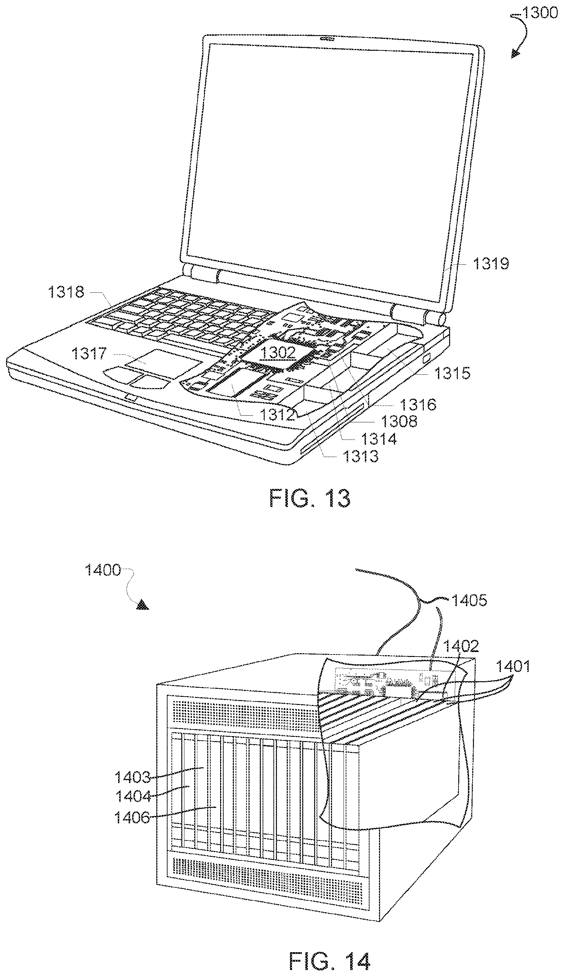

A read optional command and/or write optional command system in accordance with the various embodiments (including, but not limited to, embodiments described above with reference to FIGs. 1-11B) may be implemented in a wide variety of computing systems include a laptop computer 1300 an example of which is illustrated in FIG. 13. Many laptop computers include a touchpad touch surface 1317 that serves as the computer's pointing device, and thus may receive drag, scroll, and flick gestures similar to those implemented on computing devices equipped with a touch screen display and described above. A laptop computer 1300 will typically include a processor 1302 coupled to volatile memory 1312 and a large capacity nonvolatile memory, such as a disk drive 1313 of Flash memory. Additionally, the laptop computer 1300 may have one or more antenna 1308 for sending and receiving electromagnetic radiation that may be connected to a wireless data link and/or cellular telephone transceiver 1316 coupled to the processor 1302. The computer 1300 may also include a floppy disc drive 1314 and a compact disc (CD) drive 1315 coupled to the processor 1302. In a notebook configuration, the computer housing includes the touchpad 1317, the keyboard 1318, and the display 1319 all coupled to the processor 1302. Other configurations of the computing device may include a computer mouse or trackball coupled to the processor (e.g., via a USB input) as are well known, which may also be used in conjunction with the various embodiments.

A read optional command and/or write optional command system in accordance with the various embodiments (including, but not limited to, embodiments described above with reference to FIGs. 1-11B) may also be implemented in fixed computing systems, such as any of a variety of commercially available servers. An example server 1400 is illustrated in FIG. 14. Such a server 1400 typically includes one or more multicore processor assemblies 1401 coupled to volatile memory 1402 and a large capacity nonvolatile memory, such as a disk drive 1404. As illustrated in FIG. 14, multicore processor assemblies 1401 may be added to the server 1400 by inserting them into the racks of the assembly. The server 1400 may also include a floppy disc drive, compact disc (CD) or digital versatile disc (DVD) disc drive 1406 coupled to the processor 1401. The server 1400 may also include network access ports 1403 coupled to the multicore processor assemblies 1401 for establishing network interface connections with a network 1405, such as a local area network coupled to other broadcast system computers and servers, the Internet, the public switched telephone network, and/or a cellular data network (e.g., CDMA, TDMA, GSM, PCS, 3G, 4G, LTE, 5G or any other type of cellular data network).

Computer program code or "program code" for execution on a programmable processor for carrying out operations of the various embodiments may be written in a high level programming language such as C, C++, C#, Smalltalk, Java, JavaScript, Visual Basic, a Structured Query Language (e.g., Transact-SQL), Perl, or in various other programming languages. Program code or programs stored on a computer readable storage medium as used in this application may refer to machine language code (such as object code) whose format is understandable by a processor.

The foregoing method descriptions and the process flow diagrams are provided merely as illustrative examples and are not intended to require or imply that the operations of the various embodiments must be performed in the order presented. As will be appreciated by one of skill in the art the order of operations in the foregoing embodiments may be performed in any order. Words such as "thereafter," "then," "next," etc. are not intended to limit the order of the operations; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm operations described in connection with the various embodiments may be implemented as electronic hardware, computer software, or combinations of both. To clearly illustrate this interchangeability of hardware and software, various illustrative components, blocks, modules, circuits, and operations have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the claims.

The hardware used to implement the various illustrative logics, logical blocks, modules, and circuits described in connection with the embodiments disclosed herein may be implemented or performed with a general purpose processor, a digital signal processor (DSP), an application-specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some operations or methods may be performed by circuitry that is specific to a given function.

In one or more embodiments, the functions described may be implemented in hardware, software, firmware, or any combination thereof. If implemented in software, the functions may be stored as one or more instructions or code on a non-transitory computer-readable medium or a non-transitory processor-readable medium. The operations of a method or algorithm disclosed herein may be embodied in a processor-executable software module that may reside on a non-transitory computer-readable or processor-readable storage medium. Non-transitory computer-readable or processor-readable storage media may be any storage media that may be accessed by a computer or a processor. By way of example but not limitation, such non-transitory computer-readable or processor-readable media may include RAM, ROM, EEPROM, FLASH memory, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above are also included within the scope of non-transitory computer-readable and processor-readable media. Additionally, the operations of a method or algorithm may reside as one or any combination or set of codes and/or instructions on a non-transitory processor-readable medium and/or computer-readable medium, which may be incorporated into a computer program product.

The preceding description of the disclosed embodiments is provided to enable any person skilled in the art to make or use the claims. Various modifications to these embodiments will be readily apparent to those skilled in the art, and the generic principles defined herein may be applied to other embodiments and implementations without departing from the scope of the claims. Thus, the present disclosure is not intended to be limited to the embodiments and implementations described herein, but is to be accorded the widest scope consistent with the following claims and the principles and novel features disclosed herein.

## Claims

1. A method (900) performed in a processor of a computing device, comprising:
receiving (906) an optional command from an optional command request device;
determining (908) whether the optional command can be implemented;
terminating the optional command in response to determining (908) that the optional command cannot be implemented, wherein terminating the optional command comprises preventing the optional command from being forwarded to a device along an optional command transaction path; and
transmitting (912), to the optional command request device, an optional command no data response in response to determining (908) that the optional command cannot be implemented.

2. The method (900) of claim 1, further comprising generating (1008) the optional command no data response in response to determining (908) that the optional command cannot be implemented.

3. The method (900) of claim 1, further comprising:
determining (1004) whether a component of the computing device receiving the optional command is an optional command terminal device; and
generating (1008) the optional command no data response in response to determining (1004) that the component of the computing device receiving the optional command is an optional command terminal device.

4. The method (900) of claim 3, further comprising interpreting (1002) an optional command terminal device ID field of the optional command, wherein determining (1004) whether a component of the computing device receiving the optional command is an optional command terminal device is based on interpreting (1002) the optional command terminal device ID field.

5. The method (900) of claim 1, further comprising:
determining (1006) whether an optional command no data response condition is met; and
generating (1008) the optional command no data response in response to determining (1006) that the optional command no data response condition is met.

6. The method (900) of claim 5, further comprising interpreting (1002) an optional command no data response condition field of the optional command, wherein determining (1006) whether an optional command no data response condition is met is based on interpreting (1002) the optional command no data response condition field.

7. The method (900) of claim 1, wherein transmitting (912) the optional command no data response comprises transmitting the optional command no data response by an optional command terminal device,
the method (900) further comprising:
receiving (914) the optional command no data response from the optional command terminal device; and
reissuing (1104) the optional command in response to receiving (914) the optional command no data response.

8. The method (900) of claim 1, wherein transmitting (912) the optional command no data response comprises transmitting the optional command no data response by an optional command terminal device,
the method (900) further comprising:
receiving (914) the optional command no data response from the optional command terminal device; and
abandoning (1106) the optional command in response to receiving (914) the optional command no data response.

9. The method (900) of claim 1, wherein the optional command comprises an optional command terminal device ID field configured to indicate at least one optional command terminal device allowed to respond to the optional command with an optional command no data response.

10. The method (900) of claim 1, wherein the optional command comprises an optional command no data response condition field configured to indicate at least one condition for responding to the optional command with an optional command no data response.

11. The method (900) of claim 1, wherein the optional command no data response comprises an optional command no data response terminal device ID field configured to indicate an optional command terminal device transmitting the optional command no data response.

12. The method (900) of claim 1, wherein the optional command no data response comprises an optional command no data response condition field configured to indicate an optional command no data response condition met for transmitting the optional command no data response.

13. The method of claim 1, wherein terminating the optional command comprises:
converting (1010) the optional command to a conventional command; and
forwarding (1012) the conventional command to the device along the optional command transaction path.

14. A computing device, comprising:
means configured to receive an optional command from an optional command request device;
means configured to determine whether the optional command can be implemented;
means configured to terminate the optional command in response to determining (908) that the optional command cannot be implemented, wherein the means configured to terminate the optional command comprise means configured to prevent the optional command from being forwarded to a device along an optional command transaction path; and
means configured to transmit, to the optional command request device, an optional command no data response in response to determining that the optional command cannot be implemented.

15. A non-transitory processor-readable storage medium having stored thereon processor-executable instructions configured to cause a processing device of a computing device to perform the method according to any one of claims 1 to 13.

## Patentansprüche

1. Ein Verfahren (900), das in einem Prozessor einer Recheneinrichtung durchgeführt wird, das Folgendes aufweist:
Empfangen (906) eines optionalen Befehls von einer Einrichtung zum Anfragen optionaler Befehle;
Bestimmen (908), ob der optionale Befehl implementiert werden kann;
Beenden des optionalen Befehls ansprechend auf Bestimmen (908), dass der optionale Befehl nicht implementiert werden kann, wobei Beenden des optionalen Befehls Verhindern aufweist, dass der optionale Befehl an eine Einrichtung entlang eines Transaktionspfades optionaler Befehle weitergeleitet wird; und
Senden (912), an die Einrichtung zum Anfragen optionaler Befehle, einer Optionaler-Befehl-Keine-Daten-Antwort ansprechend auf Bestimmen (908), dass der optionale Befehl nicht implementiert werden kann.

2. Verfahren (900) nach Anspruch 1, das weiter Generieren (1008) der Optionaler-Befehl-Keine-Daten-Antwort ansprechend auf Bestimmen (908) aufweist, dass der optionale Befehl nicht implementiert werden kann.

3. Verfahren (900) nach Anspruch 1, das weiter Folgendes aufweist:
Bestimmen (1004), ob eine Komponente der Recheneinrichtung, die den optionalen Befehl empfängt, eine Endgeräteinrichtung für optionale Befehle ist; und
Generieren (1008) der Optionaler-Befehl-Keine-Daten-Antwort ansprechend auf Bestimmen (1004), dass die Komponente der Recheneinrichtung, die den optionalen Befehl empfängt, eine Endgeräteinrichtung für optionale Befehle ist.

4. Verfahren (900) nach Anspruch 3, das weiter Interpretieren (1002) eines ID-Feldes des optionalen Befehls der Endgeräteinrichtung für optionale Befehle aufweist, wobei Bestimmen (1004), ob eine Komponente der Recheneinrichtung, die den optionalen Befehl empfängt, eine Endgeräteinrichtung für optionale Befehle ist auf Interpretieren (1002) des ID-Feldes der Endgeräteinrichtung für optionale Befehle basiert.

5. Verfahren (900) nach Anspruch 1, das weiter Folgendes aufweist:
Bestimmen (1006), ob eine Optionaler-Befehl-Keine-Daten-Antwort-Bedingung erfüllt ist; und
Generieren (1008) der Optionaler-Befehl-Keine-Daten-Antwort ansprechend auf Bestimmen (1006), dass die Optionaler-Befehl-Keine-Daten-Antwort-Bedingung erfüllt ist.

6. Verfahren (900) nach Anspruch 5, das weiter Interpretieren (1002) eines Optionaler-Befehl-Keine-Daten-Antwort-Bedingungsfeldes des optionalen Befehls aufweist, wobei Bestimmen (1006), ob die Optionaler-Befehl-Keine-Daten-Antwort-Bedingung erfüllt ist, auf Interpretieren (1002) des Optionaler-Befehl-Keine-Daten-Antwort-Bedingungsfeldes basiert.

7. Verfahren (900) nach Anspruch 1, wobei Senden (912) der Optionaler-Befehl-Keine-Daten-Antwort Senden der Optionaler-Befehl-Keine-Daten-Antwort durch eine Endgeräteinrichtung für optionale Befehle aufweist, wobei das Verfahren (900) weiter Folgendes aufweist:
Empfangen (914) der Optionaler-Befehl-Keine-Daten-Antwort von der Endgeräteinrichtung für optionale Befehle; und
erneutes Ausgeben (1104) des optionalen Befehls ansprechend auf Empfangen (914) der Optionaler-Befehl-Keine-Daten-Antwort.

8. Verfahren (900) nach Anspruch 1, wobei Senden (912) der Optionaler-Befehl-Keine-Daten-Antwort Senden der Optionaler-Befehl-Keine-Daten-Antwort durch eine Endgeräteinrichtung für optionale Befehle aufweist, wobei das Verfahren (900) weiter Folgendes aufweist:
Empfangen (914) der Optionaler-Befehl-Keine-Daten-Antwort von der Endgeräteinrichtung für optionale Befehle; und
Aufgeben (1106) des optionalen Befehls ansprechend auf Empfangen (914) der Optionaler-Befehl-Keine-Daten-Antwort.

9. Verfahren (900) nach Anspruch 1, wobei der optionale Befehl ein ID-Feld der Endgeräteeinrichtung für optionale Befehle aufweist, das konfiguriert ist wenigstens eine Endgeräteeinrichtung für optionale Befehle anzuzeigen, der es gestattet ist auf den optionalen Befehl mit einer Optionaler-Befehl-Keine-Daten-Antwort zu antworten.

10. Verfahren (900) nach Anspruch 1, wobei der optionale Befehl ein Optionaler-Befehl-Keine-Daten-Antwort-Bedingungsfeld aufweist, das konfiguriert ist wenigstens eine Bedingung zum Antworten auf den optionalen Befehl mit einer Optionaler-Befehl-Keine-Daten-Antwort anzuzeigen.

11. Verfahren (900) nach Anspruch 1, wobei die Optionaler-Befehl-Keine-Daten-Antwort ein ID-Feld der Optionaler-Befehl-Keine-Daten-Antwort-Endgeräteeinrichtung aufweist, das konfiguriert ist eine Endgeräteeinrichtung für optionale Befehle anzuzeigen, die die Optionaler-Befehl-Keine-Daten-Antwort sendet.

12. Verfahren (900) nach Anspruch 1, wobei die Optionaler-Befehl-Keine-Daten-Antwort ein Optionaler-Befehl-Keine-Daten-Antwort-Bedingungsfeld aufweist, das konfiguriert ist eine Optionaler-Befehl-Keine-Daten-Antwort-Bedingung anzuzeigen, die erfüllt wird zum Senden der Optionaler-Befehl-Keine-Daten-Antwort.

13. Verfahren nach Anspruch 1, wobei Beenden des optionalen Befehls Folgendes aufweist:
Wandeln (1010) des optionalen Befehls in einen konventionellen bzw. herkömmlichen Befehl; und
Weiterleiten (1012) des herkömmlichen Befehls an die Einrichtung entlang des Transaktionspfades optionaler Befehle.

14. Eine Recheneinrichtung, die Folgendes aufweist:
Mittel, die konfiguriert sind zum Empfangen eines optionalen Befehls von einer Einrichtung zum Anfragen optionaler Befehle;
Mittel, die konfiguriert sind zum Bestimmen, ob der optionale Befehl implementiert werden kann;
Mittel, die konfiguriert sind zum Beenden des optionalen Befehls ansprechend auf Bestimmen (908), dass der optionale Befehl nicht implementiert werden kann, wobei die Mittel, die konfiguriert sind zum Beenden des optionalen Befehls, Mittel aufweisen, die konfiguriert sind zum Verhindern, dass der optionale Befehl an eine Einrichtung entlang eines Transaktionspfades optionaler Befehle weitergeleitet wird; und
Mittel, die konfiguriert sind zum Senden, an die Einrichtung zum Anfragen optionaler Befehle, einer Optionaler-Befehl-Keine-Daten-Antwort ansprechend auf Bestimmen, dass der optionale Befehl nicht implementiert werden kann.

15. Ein nicht transitorisches prozessorlesbares Speichermedium mit darauf gespeicherten, von einem Prozessor ausführbaren Instruktionen, die konfiguriert sind eine Verarbeitungseinrichtung einer Recheneinrichtung zu veranlassen das Verfahren gemäß einem der Ansprüche 1 bis 13 auszuführen.

## Revendications

1. Procédé (900) mis en œuvre dans un processeur d'un dispositif informatique, comprenant :
la réception (906) d'une commande facultative en provenance d'un dispositif de requête de commande facultative ;
la détermination (908) de si la commande facultative peut être mise en œuvre ;
la fin de la commande facultative en réponse à la détermination (908) que la commande facultative ne peut pas être mise en œuvre, dans lequel la fin de la commande facultative comprend l'action consistant à empêcher la transmission de la commande facultative à un dispositif le long d'un chemin de transaction de commande facultative ; et
l'émission (912), à destination du dispositif de requête de commande facultative, d'une réponse de commande facultative sans données en réponse à la détermination (908) que la commande facultative ne peut pas être mise en œuvre.

2. Procédé (900) selon la revendication 1, comprenant en outre la génération (1008) de la réponse de commande facultative sans données en réponse à la détermination (908) que la commande facultative ne peut pas être mise en œuvre.

3. Procédé (900) selon la revendication 1, comprenant en outre :
la détermination (1004) de si un composant du dispositif informatique qui reçoit la commande facultative est un dispositif terminal de commande facultative ; et
la génération (1008) de la réponse de commande facultative sans données en réponse à la détermination (1004) que le composant du dispositif informatique qui reçoit la commande facultative est un dispositif terminal de commande facultative.

4. Procédé (900) selon la revendication 3, comprenant en outre l'interprétation (1002) d'un champ d'ID de dispositif terminal de commande facultatif de la commande facultative, dans lequel la détermination (1004) de si un composant du dispositif informatique qui reçoit la commande facultative est un dispositif terminal de commande facultatif est basée sur l'interprétation (1002) du champ d'ID de dispositif terminal de commande facultatif.

5. Procédé (900) selon la revendication 1, comprenant en outre :
la détermination (1006) de si une condition de réponse à une commande facultative sans données est remplie ; et
la génération (1008) de la réponse de commande facultative sans données en réponse à la détermination (1006) que la condition de réponse de commande facultative sans données est remplie.

6. Procédé (900) selon la revendication 5, comprenant en outre l'interprétation (1002) d'un champ de condition de condition de réponse de commande facultative sans données de la commande facultative, dans lequel la détermination (1006) que la condition de réponse de commande facultative sans données est remplie est basée sur l'interprétation (1002) du champ de condition de réponse d'absence de données de commande facultative.

7. Procédé (900) selon la revendication 1, dans lequel l'émission (912) de la réponse de commande facultative sans données comprend l'émission de la réponse de commande facultative sans données par un dispositif terminal de commande facultative,
le procédé (900) comprenant en outre :
la réception (914) de la commande facultative sans réponse de données en provenance du terminal de commande facultative ; et
la réémission (1104) de la commande facultative en réponse à la réception (914) de la réponse de commande facultative sans données.

8. Procédé (900) selon la revendication 1, dans lequel l'émission (912) de la réponse de commande facultative sans données comprend l'émission de la réponse de commande facultative sans données par un dispositif terminal de commande facultative,
le procédé (900) comprenant en outre :
la réception (914) de la commande facultative sans réponse de données en provenance du terminal de commande facultative ; et
l'abandon (1106) de la commande facultative en réponse à la réception (914) de la réponse de commande facultative sans données.

9. Procédé (900) selon la revendication 1, dans lequel la commande facultative comprend un champ d'ID de dispositif terminal de commande facultative configuré pour indiquer au moins un dispositif terminal de commande facultative autorisé à répondre à la commande facultative avec une réponse de commande facultative sans données.

10. Procédé (900) selon la revendication 1, dans lequel la commande facultative comprend un champ de condition de réponse de commande facultative sans données configuré pour indiquer au moins une condition de réponse à la commande facultative avec une réponse de commande facultative sans données.

11. Procédé (900) selon la revendication 1, dans lequel la commande facultative comprend un champ d'ID de dispositif terminal de réponse de commande facultative sans données configuré pour indiquer un dispositif terminal de commande facultative qui émet la réponse de commande facultative sans données.

12. Procédé (900) selon la revendication 1, dans lequel la réponse de commande facultative sans données comprend un champ de condition de réponse de commande facultative sans données configuré pour indiquer une condition de réponse de commande facultative sans données remplie pour émettre la réponse de commande facultative sans données.

13. Procédé selon la revendication 1, dans lequel la fin de la commande facultative comprend :
la conversion (1010) de la commande facultative en une commande conventionnelle ; et
l'émission (1012) de la commande conventionnelle au périphérique par l'intermédiaire du chemin de transaction de commande facultatif.

14. Dispositif informatique, comprenant :
des moyens configurés pour recevoir une commande facultative à partir d'un dispositif de requête de commande facultative ;
des moyens configurés pour déterminer si la commande facultative peut être mise en œuvre ;
des moyens configurés pour mettre fin à la commande facultative en réponse à la détermination (908) que la commande facultative ne peut pas être mise en œuvre, dans lequel la fin de la commande facultative comprend des moyens configurés pour empêcher la transmission de la commande facultative à un dispositif le long d'un chemin de transaction de commande facultative ; et
des moyens configurés pour émettre, à destination du dispositif de requête de commande facultative, une réponse de commande facultative sans données en réponse à la détermination (908) que la commande facultative ne peut pas être mise en œuvre.

15. Support de stockage non transitoire lisible par processeur sur lequel sont stockées des instructions exécutables par processeur configurées pour amener un dispositif de traitement d'un dispositif informatique à mettre en œuvre le procédé selon l'une quelconque des revendications 1 à 13.
